# EUROPEAN PATENT SPECIFICATION

(11) **EP 4 342 246 B1**
(45) Date of publication and mention of the grant of the patent: **02.09.2026**
(21) Application number: 21940111.4
(22) Date of filing: 18.05.2021
(51) Int. Cl.: H04W 72/51, H04W 8/24, H04W 72/0446

(54) **SEMI-STATIC SLOT FORMAT CONFIGURATION FOR HALF DUPLEX FREQUENCY DIVISION DUPLEXING IN NEW RADIO**
HALBSTATISCHE SCHLITZFORMATKONFIGURATION FÜR HALBDUPLEX-FREQUENZTEILUNGSDUPLEX IN NEW RADIO
CONFIGURATION DE FORMATS D'EMPLACEMENTS SEMI-STATIQUES POUR LE DUPLEXAGE À DIVISION DE FRÉQUENCE EN SEMI-DUPLEX DANS UNE NOUVELLE RADIO

(43) Date of publication of application: 27.03.2024
(73) Proprietor: QUALCOMM INCORPORATED, San Diego, California 92121-1714 (US)
(72) Inventor: LEI, Jing, San Diego, California 92121-1714 (US); GAAL, Peter, San Diego, California 92121-1714 (US); TRIKHA, Pushp, San Diego, California 92121-1714 (US); MENON, Murali, San Diego, California 92121-1714 (US); JI, Tingfang, San Diego, California 92121-1714 (US); WEI, Chao, San Diego, California 92121-1714 (US); CHEN, Wanshi, San Diego, California 92121-1714 (US); HE, Linhai, San Diego, California 92121-1714 (US); MUKKAVILLI, Krishna Kiran, San Diego, California 92121-1714 (US)
(74) Representative: Tomkins & Co
(86) International application number: PCT/CN2021/094454
(87) International publication number: WO 2022/241654

(56) References cited:
- WO-A1-2021/007079
- CN-A- 109 644 461
- CN-A- 111 034 105
- CN-A- 111 787 622
- QUALCOMM INCORPORATED: "Type-A HD-FDD for RedCap UE", vol. RAN WG1, no. e-Meeting; 20210510 - 20210527, 12 May 2021 (2021-05-12), XP052010930, Retrieved from the Internet <URL:https://ftp.3gpp.org/tsg_ran/WG1_RL1/TSGR1_105-e/Docs/R1-2104679.zip R1-2104679 Type-A HD-FDD for RedCap UE.docx> [retrieved on 20210512]
- MODERATOR (QUALCOMM INC): "FL summary #2 on duplex operation for RedCap", vol. RAN WG1, no. e-Meeting; 20210412 - 20210420, 14 April 2021 (2021-04-14), XP051995403, Retrieved from the Internet <URL:https://ftp.3gpp.org/tsg_ran/WG1_RL1/TSGR1_104b-e/Inbox/R1-2103884.zip R1-2103884.docx> [retrieved on 20210414]
- INTERDIGITAL ET AL: "Discussion on UE complexity reduction features", vol. RAN WG1, no. e-Meeting; 20210125 - 20210205, 19 January 2021 (2021-01-19), XP051971668, Retrieved from the Internet <URL:https://ftp.3gpp.org/tsg_ran/WG1_RL1/TSGR1_104-e/Docs/R1-2101507.zip R1-2101507 Discussion on UE complexity reduction features.docx> [retrieved on 20210119]

## Description

### BACKGROUND

### Field of the Disclosure

Aspects of the present disclosure relate to wireless communications, and more particularly, to techniques for a semi-static format configuration.

### Description of Related Art

Wireless communication systems are widely deployed to provide various telecommunication services such as telephony, video, data, messaging, broadcasts, or other similar types of services. These wireless communication systems may employ multiple-access technologies capable of supporting communication with multiple users by sharing available system resources with those users (e.g., bandwidth, transmit power, or other resources). Multiple-access technologies can rely on any of code division, time division, frequency division orthogonal frequency division, single-carrier frequency division, or time division synchronous code division, to name a few.

These and other multiple access technologies have been adopted in various telecommunication standards to provide a common protocol that enables different wireless devices to communicate on a municipal, national, regional, and even global level. New radio (e.g., 5G NR) is an example of an emerging telecommunication standard. NR is a set of enhancements to the LTE mobile standard promulgated by 3GPP. NR is designed to better support mobile broadband Internet access by improving spectral efficiency, lowering costs, improving services, making use of new spectrum, and better integrating with other open standards.

Although wireless communication systems have made great technological advancements over many years, challenges still exist. For example, complex and dynamic environments can still attenuate or block signals between wireless transmitters and wireless receivers, undermining various established wireless channel measuring and reporting mechanisms, which are used to manage and optimize the use of finite wireless channel resources. Consequently, there exists a need for further improvements in wireless communications systems to overcome various challenges. 3GPP Draft R1-2104679 describes Type-A HD-FDD for RedCap UE. 3GPP draft R1-2103884 describes duplex operation for RedCap.

### SUMMARY

Certain aspects of the subject matter described in this disclosure can be implemented in a method for wireless communication by a user equipment (UE). The method generally includes sending a message to a base station (BS) with UE capability information indicating one or more capabilities of the UE. The method generally includes receiving signaling from the BS indicating a semi-static slot format configuration based on the UE capability information, the slot format configuration including one or more slot format patterns and a cyclic shift (CS) associated with one or more slot format patterns. The method generally includes communicating with the BS based on the semi-static slot format configuration and the CS.

Certain aspects of the subject matter described in this disclosure can be implemented in a method for wireless communication by a BS. The method generally includes receiving a message from a UE with UE capability information indicating one or more capabilities of the UE. The method generally includes sending signaling to the UE indicating a semi-static slot format configuration based on the UE capability information, the slot format configuration including one or more slot format patterns and a CS associated with one or more slot format patterns. The method generally includes communicating with the UE based on the semi-static slot format configuration and the CS.

Other aspects provide: an apparatus operable, configured, or otherwise adapted to perform the aforementioned methods as well as those described elsewhere herein; a non-transitory, computer-readable media comprising instructions that, when executed by one or more processors of an apparatus, cause the apparatus to perform the aforementioned methods as well as those described elsewhere herein; a computer program product on a computer-readable storage medium comprising code for performing the aforementioned methods as well as those described elsewhere herein; and an apparatus comprising means for performing the aforementioned methods as well as those described elsewhere herein. By way of example, an apparatus may comprise a processing system, a device with a processing system, or processing systems cooperating over one or more networks.

The following description and the appended figures set forth certain features for purposes of illustration.

### BRIEF DESCRIPTION OF THE DRAWINGS

So that the manner in which the above-recited features of the present disclosure can be understood in detail, a more particular description, briefly summarized above, may be had by reference to aspects, some of which are illustrated in the drawings. It is to be noted, however, that the appended drawings illustrate only certain aspects of this disclosure and the description may admit to other equally effective aspects.
**FIG. 1** is a block diagram conceptually illustrating an example wireless communication network, in accordance with certain aspects of the present disclosure.
**FIG. 2** is a block diagram conceptually illustrating aspects of an example base station (BS) and user equipment (UE), in accordance with certain aspects of the present disclosure.
**FIGS. 3A-3D** depict various example aspects of data structures for a wireless communication network, in accordance with certain aspects of the present disclosure.
**FIG. 4** depicts example new radio (NR) time division duplexing (TDD), in accordance with certain aspects of the present disclosure].
**FIGs. 5A-5B** depict example switching in NR half-duplex (HD) frequency division duplexing (FDD), in accordance with certain aspects of the present disclosure].
**FIG. 6** is a table illustrating example slot formats, in accordance with certain aspects of the present disclosure.
**FIG. 7** is a call flow diagram illustrating example signaling for semi-static slot format configuration, in accordance with aspects of the present disclosure.
**FIG. 8** is another call flow diagram illustrating example signaling for semi-static slot format configuration, in accordance with aspects of the present disclosure.
**FIG. 9** depicts example semi-static slot configurations for five UEs, in accordance with certain aspects of the present disclosure.
**FIG. 10** depicts example semi-static slot configuration wraparound for collision handling, in accordance with certain aspects of the present disclosure.
**FIG. 11** depicts example semi-static slot configuration override for collision handling, in accordance with certain aspects of the present disclosure.
**FIGs. 12A-12B** is a flow diagram illustrating example operations for wireless communication by a UE, in accordance with certain aspects of the present disclosure.
**FIGs. 13A-13B** is a flow diagram illustrating example operations for wireless communication by a BS, in accordance with certain aspects of the present disclosure.
**FIG. 14** illustrates an example communications device, in accordance with aspects of the present disclosure.
**FIG. 15** illustrates an example communications device, in accordance with aspects of the present disclosure.

To facilitate understanding, identical reference numerals have been used, where possible, to designate identical elements that are common to the figures. It is contemplated that elements disclosed in one aspect may be beneficially utilized on other aspects without specific recitation.

### DETAILED DESCRIPTION

Aspects of the present disclosure provide apparatus, methods, processing systems, and computer readable mediums for slot format configuration. Aspects provide a semi-static slot configuration for half-duplex (HD) frequency division duplexing (FDD) in new radio (NR).

### Example Wireless Communication Network

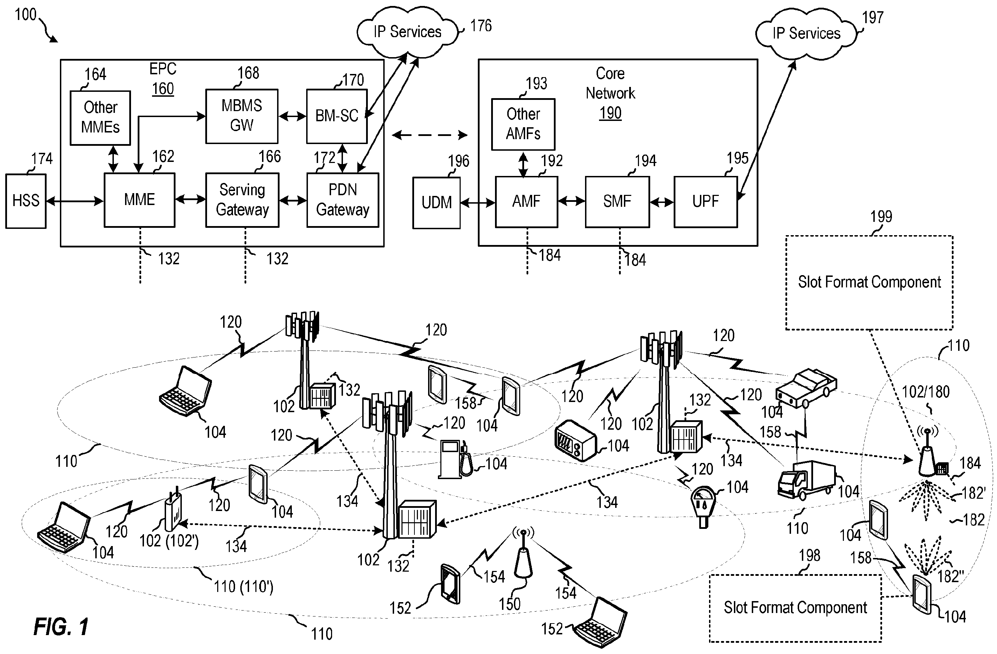

**FIG. 1** depicts an example of a wireless communications network 100, in which aspects described herein may be implemented. Wireless communication network 100 may be a new radio (NR) network (e.g., a 5G NR network).

Generally, wireless communications network 100 includes base stations (BSs) 102, user equipments (UEs) 104, an Evolved Packet Core (EPC) 160, and core network 190 (e.g., a 5G Core (5GC)), which interoperate to provide wireless communications services.

BSs 102 may provide an access point to EPC 160 and/or to the core network 190 for a user equipment 104. BSs 102 may perform one or more of the following functions: transfer of user data, radio channel ciphering and deciphering, integrity protection, header compression, mobility control functions (e.g., handover, dual connectivity), inter-cell interference coordination, connection setup and release, load balancing, distribution for non-access stratum (NAS) messages, NAS node selection, synchronization, radio access network (RAN) sharing, multimedia broadcast multicast service (MBMS), subscriber and equipment trace, RAN information management (RIM), paging, positioning, delivery of warning messages, among other functions. BSs 102 may include and/or be referred to as a next generation Node B (gNB), a Node B, an evolved Node B (eNB), an access point (AP), a base transceiver station (BTS), a radio base station, a radio transceiver, a transceiver function, or a transmit reception point (TRP) in various contexts.

BSs 102 wirelessly communicate with UEs 104 via communications links 120. Each of the BSs 102 may provide communication coverage for a respective geographic coverage area 110, which may overlap in some cases. For example, small cell 102' (e.g., a low-power BS) may have a coverage area 110' that overlaps the coverage area 110 of one or more macrocells (e.g., high-power BSs).

Communication links 120 between BSs 102 and UEs 104 may include uplink (UL) (also referred to as reverse link) transmissions from a UE 104 to a BS102 and/or downlink (DL) (also referred to as forward link) transmissions from a BS 102 to a UE 104. Communication links 120 may use multiple-input multiple-output (MIMO) antenna technology, including spatial multiplexing, beamforming, and/or transmit diversity in various aspects.

Examples of UEs 104 include a cellular phone, a smart phone, a session initiation protocol (SIP) phone, a laptop, a personal digital assistant (PDA), a satellite radio, a global positioning system (GPS), a multimedia device, a video device, a digital audio player, a camera, a game console, a tablet, a smart device, a wearable device, a vehicle, an electric meter, a gas pump, a large or small kitchen appliance, a healthcare device, an implant, a sensor/actuator, a display, or other similar devices. Some of UEs 104 may be internet of things (IoT) devices (e.g., parking meter, gas pump, toaster, vehicles, heart monitor, or other IoT devices), always on (AON) devices, or edge processing devices. UEs 104 may also be referred to more generally as a station, a mobile station (MS), a subscriber station, a mobile unit, a subscriber unit, a wireless unit, a remote unit, a mobile device, a wireless device, a wireless communications device, a remote device, a mobile subscriber station, an access terminal (AT), a mobile terminal (MT), a wireless terminal, a remote terminal, a handset, a user agent, a mobile client, or a client.

According to certain aspects, BSs 102 and UEs 104 may be configured for semi-static slot format configuration. As shown in FIG. 1, BS 102 includes a slot format component 199 that may configure UEs 104 with slot format configurations, in accordance with aspects of the present disclosure. UE 120a includes a slot format component 198 that receives and applies a semi-static slot format configuration, in accordance with aspects of the present disclosure.

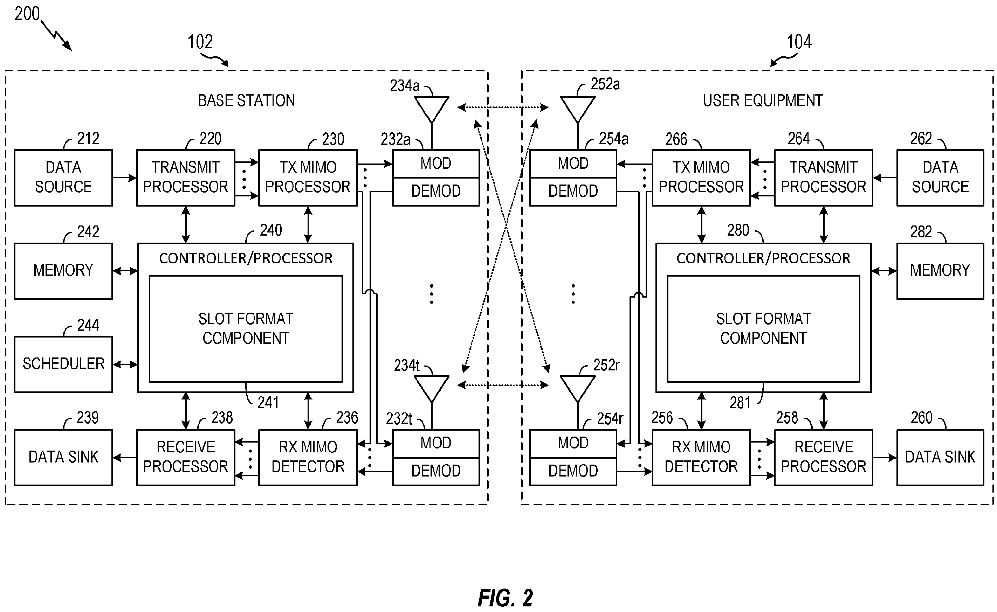

FIG. 2 depicts aspects of an example BS 102 and UE 104.

Generally, BS 102 includes various processors (e.g., 220, 230, 238, and 240), antennas 234a-t (collectively 234), transceivers 232a-t (collectively 232) which include modulators and demodulators, and other aspects, which enable wireless transmission of data (e.g., source data 212) and wireless reception of data (e.g., data sink 239). For example, BS 102 may send and receive data between itself and UE 104.

BS 102 includes controller/processor 240, which may be configured to implement various functions related to wireless communications. In the depicted example, controller/processor 240 includes slot format component 241, which may be representative of slot format component 199 of **FIG. 1****.** Notably, while depicted as an aspect of controller/processor 240, slot format component 241 may be implemented additionally or alternatively in various other aspects of BS 102 in other implementations.

Generally, UE 104 includes various processors (e.g., 258, 264, 266, and 280), antennas 252a-r (collectively 252), transceivers 254a-r (collectively 254), which include modulators and demodulators, and other aspects, which enable wireless transmission of data (e.g., source data 262) and wireless reception of data (e.g., data sink 260).

UE 102 includes controller/processor 280, which may be configured to implement various functions related to wireless communications. In the depicted example, controller/processor 280 includes slot format component 281, which may be representative of slot format component 198 of **FIG. 1****.** Notably, while depicted as an aspect of controller/processor 280, slot format component 281 may be implemented additionally or alternatively in various other aspects of user equipment 104 in other implementations.

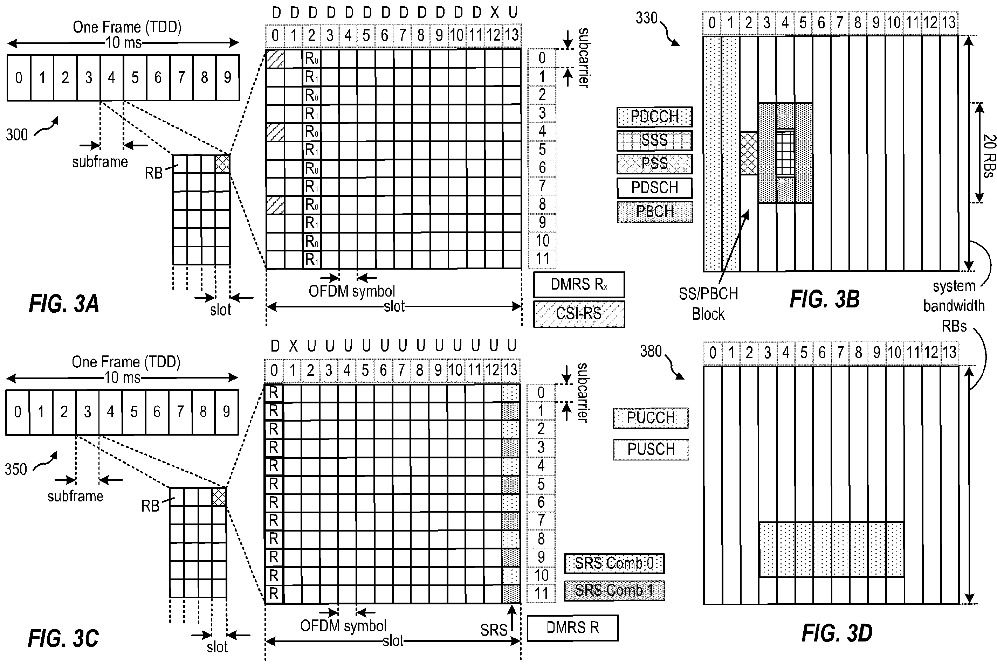

**FIGS. 3A-3D** depict aspects of data structures for a wireless communication network, such as wireless communication network 100 of **FIG. 1****.** In particular, **FIG. 3A** is a diagram 300 illustrating an example of a first subframe within a 5G (e.g., 5G NR) frame structure, **FIG. 3B** is a diagram 330 illustrating an example of DL channels within a 5G subframe, **FIG. 3C** is a diagram 350 illustrating an example of a second subframe within a 5G frame structure, and **FIG. 3D** is a diagram 380 illustrating an example of UL channels within a 5G subframe.

Further discussions regarding **FIG. 1****,** **FIG. 2****,** and **FIGS. 3A****-3D** are provided later in this disclosure.

Various duplexing schemes may be used for communication in wireless communication network 100. Duplexing scheme may be half-duplex or full-duplex. Some examples of duplexing schemes includes time division duplexing (TDD) and frequency division duplexing (FDD).

In TDD, only one carrier frequency may be used. Transmission in the uplink (UL) and reception in the downlink (DL) occurs on same frequency but at different time slots. Time slots can be allocated either to the UL or the DL, or both UL and DL. Unpaired bands are used for TDD, where UL and DL transmissions are non-overlapping in time.

In 5G NR, one slot consists of 14 OFDMA symbols for normal cyclic prefix (CP) length and the slot configuration indicates the type of slot: UL or DL, or a hybrid. In LTE, UL/DL changes were only at subframe level. Switching between UL and DL at OFDMA symbol level in 5G NR allows greater flexibility but causes challenges in implementation due to shorter time intervals and faster switching times.

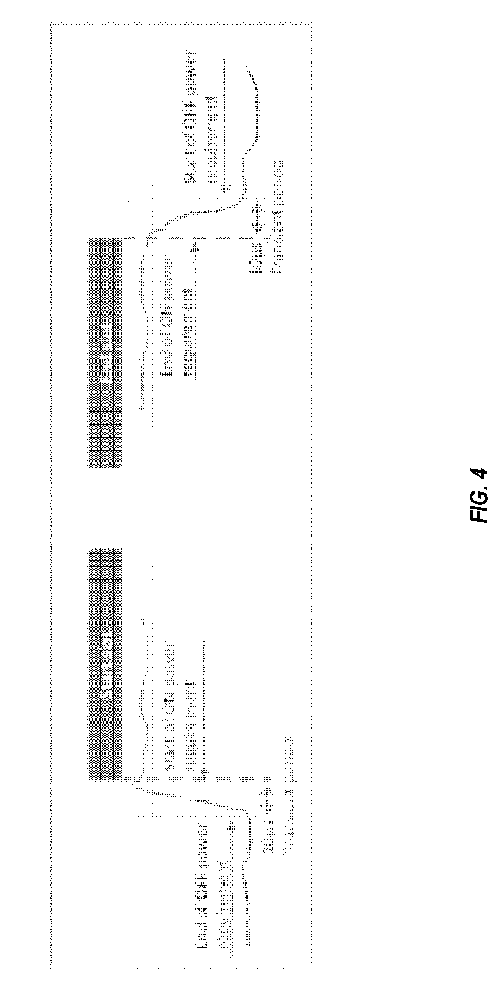

**FIG. 4** depicts example NR TDD, in accordance with certain aspects of the present disclosure. In NR TDD, a minimum RX-to-TX switching time for a UE may be 13 µsec and a minimum TX-to-RX switching may be 13 µsec.

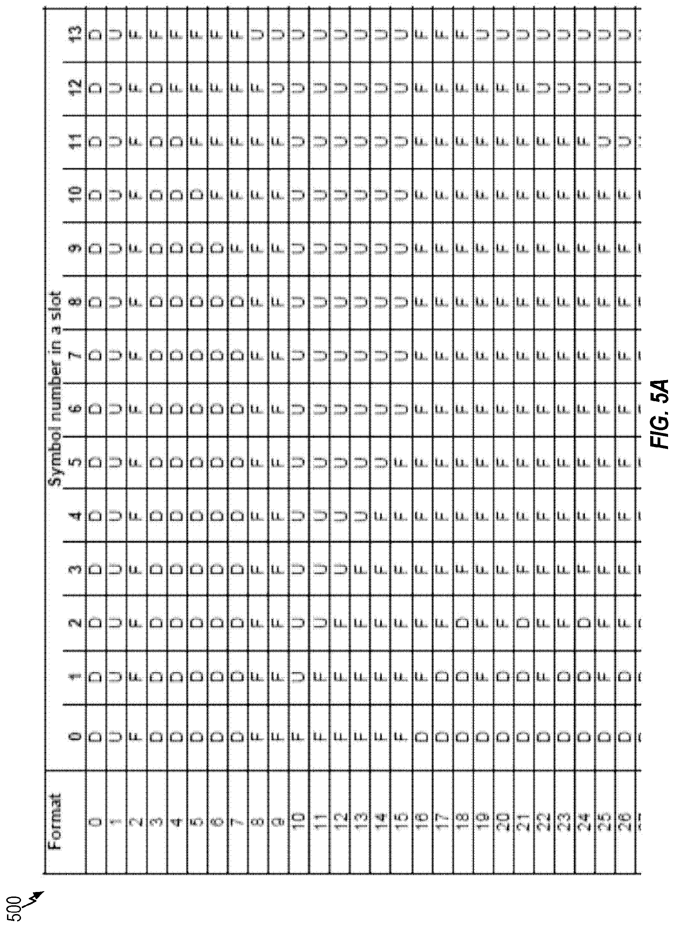

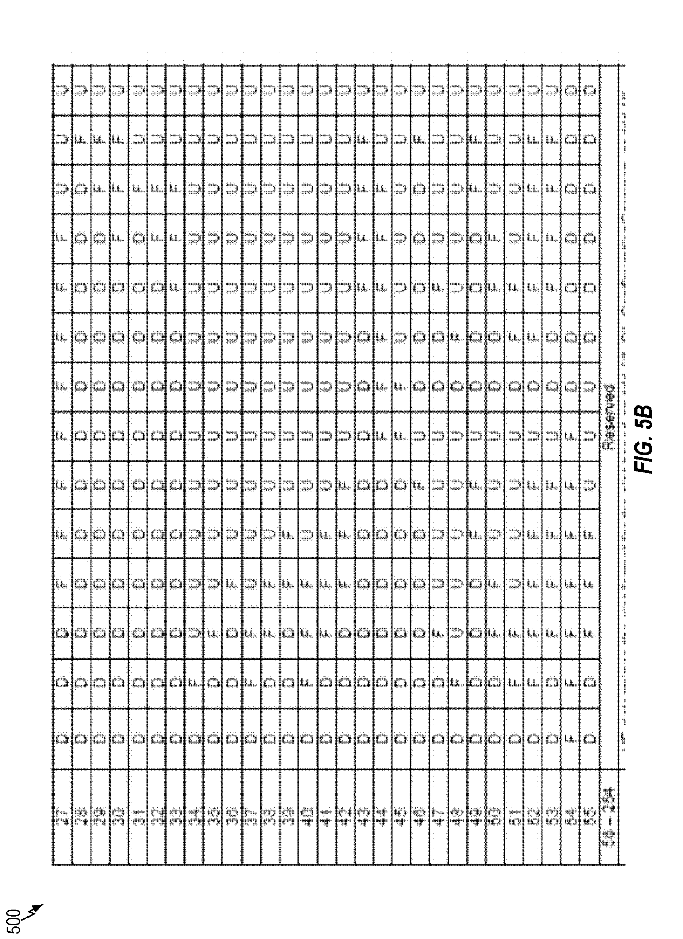

**FIGs. 5A-5B** is a table illustrating example slot formats, in accordance with certain aspects of the present disclosure. In TDD, when a slot has DL and UL symbols, flexible symbols are always configured when DL switches to UL. For example, as shown in **FIG. 5B****,** in format 28, there is at least one flexible symbol 12 between DL symbol 11 and UL symbol 13. However, in TDD, a flexible symbol is not configured between UL and DL symbols. As shown in **FIG. 5B****,** in format 46, there is no flexible symbol between UL symbol 6 and DL symbol 7.

For synchronization, a timing advance (TA) is used to control timing of UE transmissions so that UL transmissions from all the UEs to arrive at the same time at the BS. The TA also compensates for the round trip delay in the signal propagating from the sending UE to the receiving BS. Transmission of the uplink radio frame number i from the UE shall start (*N_{TA} + N_{TA, offset}*)*T_{c}* seconds before the start of the corresponding downlink radio frame at the UE.

In FDD, a carrier is designated as paired spectrum having an UL and DL carrier. Data transfer is possible in both the directions simultaneously at the same time because of different carrier frequencies for different directions. Also, allocation of resources can be managed dynamically and assigned independently in either the UL or the DL direction. Duplex filters (transmission/reception filters) are used to isolate between UL and DL transmissions.

FDD may be full-duplex (FD). In FD FDD, it is possible to have simultaneous transmission and reception in both UL and DL within a cell on a frequency band.

FDD may be half-duplex (HD). In HD FDD, for a frequency band, it is not possible to have simultaneous transmission and reception in both UL and DL within a cell. HD operations allows for a simplified device implementation due to relaxed or no-duplex filters. A UE can sequentially toggle is transmit (TX) phase locked loop (PLL) and receive (TX) PLL. A phase-locked loop or phase lock loop (PLL) is a control system that generates an output signal whose phase is related to the phase of an input signal. Thus, a transceiver chain can be in a low-power state when communication is going on in the opposite direction. This may provide lower noise and insertion loss.

Replacing a duplexer may results in savings per FDD band. These savings scale up with multi-band operation. However, because UL and DL are not simultaneous, a guard period between UL and DL is used in HD FDD to mitigate the cross link interference for switching between UL to DL and DL to UL.

Accordingly, aspects of the present disclosure provide techniques for slot format configuration, such as a semi-static slot format configuration for NR HD FDD.

### Example Semi-static Slot Format Configuration for Half Duplex Frequency Division Duplexing in New Radio

In long term evolution (LTE) half-duplex (HD) frequency division duplexing (FDD), Type A HD FDD uses a guard period is created by a use equipment UE) by not receiving the last part (e.g., a few symbols) of a downlink (DL) subframe immediately preceding an uplink (UL) subframe from the same UE. In LTE HD FDD, Type B HD FDD uses guard periods created by the UE by not receiving a downlink subframe immediately preceding an uplink subframe from the same UE and not receiving a downlink subframe immediately following an uplink subframe from the same UE.

New radio (NR) HD FDD may have a lower latency and a higher throughput than LTE HD FDD Type B. LTE HD FDD Type B may use a one subframe switching gap for reception (RX) to transmission (TX) switching (e.g., DL-to-UL) and TX-to-RX switching (e.g., UL-to-DL), while NR HD FDD uses a symbol-level switching gap for RX-to-TX switching and TX-to-RX switching. Also, in NR HD FDD, the switching gap for RX-to-TX switching may be a different length than the switching gap for TX-to-RX switching.

Switching may be more flexible in NR HD FDD. For example, in LTE HD FDD Type A, RX-to-TX switching can only happen at the end of the last DL subframe before UL transmission begins, while in NR HD FDD RX-to-TX switching can happen anywhere in a DL slot.

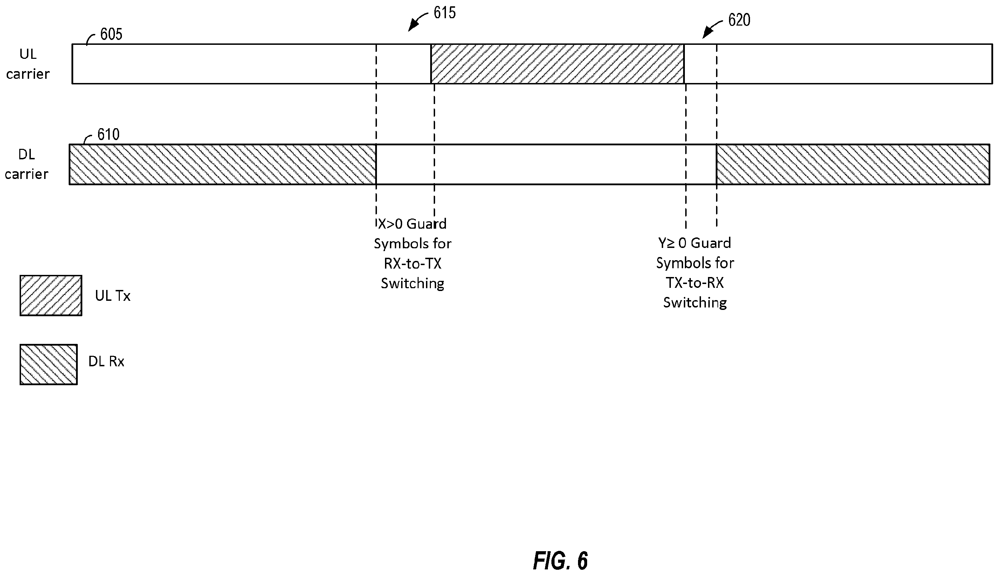

**FIG. 6** depicts example switching in NR HD FDD, in accordance with certain aspects of the present disclosure. As shown in **FIG. 6** for HD FDD, the UE may transmit using an uplink carrier 605 and receive using a downlink carrier 610. The UE may be configured with X>0 guard symbols 615 for RX-to-TX (e.g., DL-to-UL) switching and Y≥0 guard symbols 620 for TX-to-RX (e.g., UL-to-DL) switching.

Guard symbols may be configured for NR HD FDD to accommodate the timing advance operation, to mitigate signal quality degradation caused by spurs/phase errors of direction switching and to enhance power saving. Minimum switching time of RX-to-TX switching and TX-to-TX switching are UE capabilities. Thus, the number of guard symbols for switching are lower bounded by the UE capability switching times.

Power saving enhancement and simplification of direction collision handling can be achieved by semi-statically configuring the DL/UL split and guard symbols of HD FDD. For example, the UE can be semi-statically configured with a slot format configuration for HD FDD. The slot format configuration can be configured by system information (SI) and/or radio resource control (RRC) signalling. The semi-static slot format configuration may configure one or more slot format patterns and associated cyclic prefix (CP). UEs that follow the same slot format pattern may be configured with different CPs. Thus, the UE can follow a semi-static configured slot format pattern that includes guard symbols for switching, rather than a dynamic downlink control information (DCI) based signalled switching time, which may involve less signalling overhead. Further, compared to the alternative of DCI-based TX/RX switching, the prior semi-statically configured DL/UL split can be leveraged by the UE to program the on/off schedule of phase locked loop(s) (PLL(s)) to enhance the power saving gain.

The semi-static slot format configuration may be based on UE capabilities. For example, the network may send an enquiry for the UEs capability information and the UE signals UE capability information to the network. The UE capability information may include the minimum RX-to-TX and TX-to-RX switching times of the UE. The UE may also report buffer status report (BSR), an indication for coverage enhancement, channel state information (CSI) report, a target quality-of-service (QoS), and/or UE assistance information (UAI) to the serving cell. The reports may be requested from the network. The semi-static slot format configuration may be configured based on the UE capabilities and the other reports and UAI from the UE.

The semi-static slot format configuration includes one or more slot format patterns. The slot format pattern may be pattern indicating *L_{d}* DL slots, *Lₛ* special slots, and *Lᵤ* UL slots, where the *Lₛ* special slots are interleaved with *L_{d}* DL slots and *Lᵤ* UL slots, that is one or more special slots may be configured between DL and UL slots and between UL and DL slots. Each special slot includes *n_{d}* ≥ 0 DL symbols, *n_{f}* ≥ 0 flexible symbols, and *nᵤ* ≥ 0 UL symbols. For normal CP, *n_{d} + n_{f} + nᵤ =* 14. For extended CP, *n_{d} + n_{f} + nᵤ =* 12. Each DL slot includes all DL symbols, where all DL slots/symbols are mapped to a DL carrier. Each UL slot includes UL symbols only, where all UL slots/symbols are mapped to an UL carrier.

In a special slot, at least *n_{g}* flexible symbols are mapped to the guard symbols for the minimum DL-to-UL switching or UL-to-DL switching, wherein 0 ≤ *n_{g}* ≤ *n_{f}* The UE is not expected to transmit/receive on the guard symbols. The remaining *n_{f} - n_{g}* symbols can be configured as DL or UL symbols by the network.

One or multiple slot format patterns can be defined for a UE, which can be concatenated in time, or can be flipped by DCI or medium access control control element (MAC CE) signaling.

According to certain aspects, the slot format configuration is configured while after RRC connection establishment. According to the claimed implementation, the one or more slot format patterns and the CS can be configured together or separately. For example, both the slot format patterns and the associated CS may be UE-specific and configured via dedicated signaling. Alternatively, the slot format pattern may be group-common and configured via broadcast/multicast, while the CS may be UE-specific. The CS is applied in time domain. The CS granularity can be slot, half-frame, or frame.

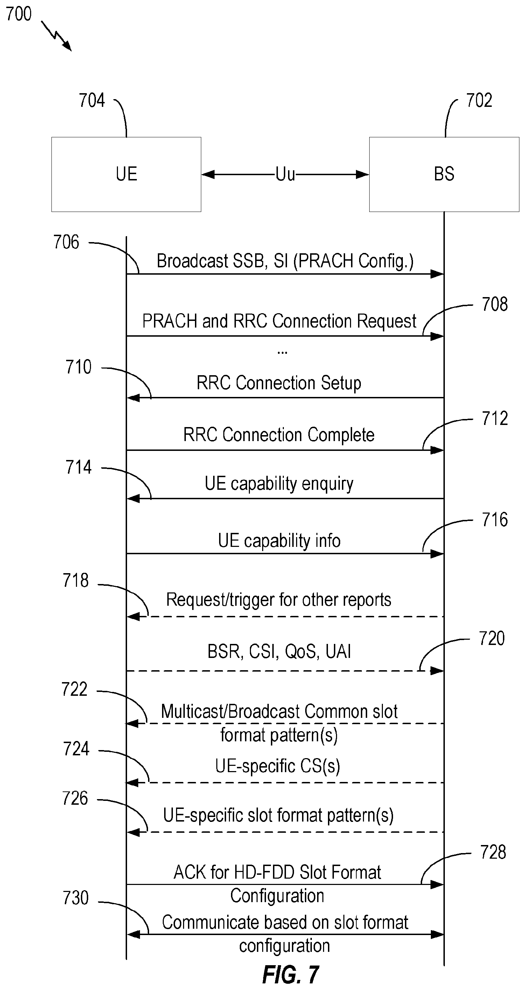

**FIG. 7** is a call flow diagram illustrating example signaling 700 for semi-static slot format configuration, in accordance with aspects of the present disclosure.

A UE 704 may be operating on paired spectrum. At 706, UE 704 may receive a broadcast synchronization signal block (SSB) and/or a system information block (SIB) from BS 702 that may include a physical random access channel (PRACH) configuration for UE 704. The PRACH configuration may configure PRACH occasions and resources.

At 708, UE 704 may perform PRACH transmission (e.g., RACH preamble) and begin RRC connection setup with BS 702. At 710, UE 704 receives an RRC connection setup message from BS 702. At 712, UE 704 sends an RRC connection complete message to BS 702.

After completion of the RRC connection setup, in the RRC connected state, UE 704 may receive a UE capability enquiry from BS 702 at 714. At 716, UE 704 sends UE capability information to BS 702. As discussed above, the UE capability information may include the minimum switching times for the UE. The UE capability information may also indicate capability for HD FDD operation. At 718, UE 704 may receive a request and/or a trigger for one or more reports or additional information. At 720, UE 704 sends the reports and/or additional information. As discussed above, this may include BSR, an indication for coverage enhancement, a CSI report, a target QoS, and UAI.

According to certain aspects, after UE 704 and BS 702 establish an RRC connection, BS 702 configures UE 704 with a semi-static slot format configuration. The semi-static slot format configuration may be for NR HD FDD. The semi-static slot format configuration includes one or more slot format patterns and associated CS.

As shown in **FIG. 7****,** UE 704 may receive one or more group common or cell-specific slot format patterns via multicast and/or broadcast (e.g., in SI or MAC CE), at 722. UE 704 receives associated UE-specific CS(s) at 724. Different UEs may be configured with different CSs for the group common or cell-specific slot format pattern(s). The UE-specific CSs may be sent via dedicated signaling (e.g., dedicated RRC signaling or DCI). The CS(s) signaled via dedicated signaling at 724 and the cell-specific or group common slot format pattern(s) via broadcast/multicast at 722 correspond to the semi-static slot format configuration.

In some examples, UE 704 receives one or more UE-specific slot format pattern(s) from BS 702 via dedicated signaling, at 726. The CS(s) signaled via dedicated signaling at 724 and the cell-specific or group common slot format pattern(s) via dedicated signaling at 726 correspond to the semi-static slot format configuration. Although shown at 724 and 726, the UE-specific CSs and UE-specific slot format patterns may be signaled together via dedicated signaling and/or the UE-specific slot format patterns may be signaled before the UE-specific CSs.

During the operations 706-726, until UE 704 is configured with the semi-static slot format configuration, UE 704 may use dynamic, DCI signaled switching times for TX-to-RX and RX-to-TX switching.

At 728, UE 704 may send an acknowledgment for the semi-static HD FDD slot format configuration.

At 730, UE 704 and BS 702 communicate according to the semi-static slot format configuration.

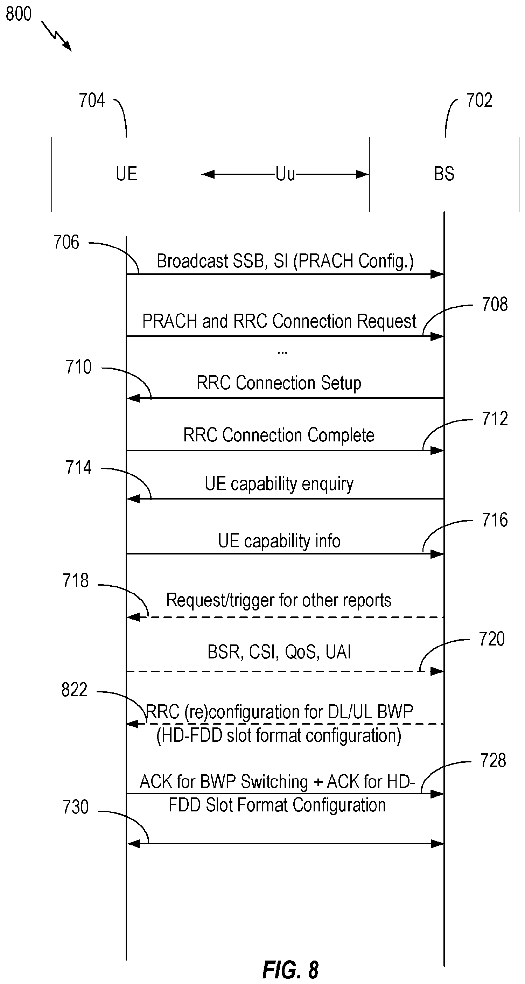

According to certain aspects, one or more slot format patterns are preconfigured at UE 704 and associated with one or more DL bandwidth part(s) (BWP) and UL BWP(s). Thus, a slot format pattern can be indicated by the BWP that UE 704 is configured to use. As shown in **FIG. 8****,** UE 704 may receive a dedicated RRC message, such as an RRC configuration and/or an RRC reconfiguration message, including a BWP configuration at 822. The BWP configuration may include an UL and DL BWP identifier (ID). The BWP ID may indicate the associated slot format pattern. The RRC configuration and/or reconfiguration message at 822 may also indicate the associated CS(s). In some examples, the UE-specific CS can signaled separately, from the BWP ID, to UE 704 via dedicated signaling (e.g., dedicated RRC signaling such as DCI or MAC CE).

According to certain aspects, there may be a direction collision between the slot format configuration and a cell-specific configuration of the serving cell. For example, a direction collision may occur when a semi-statically configured uplink slot collides with a downlink transmission of the serving cell, such as SSB. Another example of a direction collision is when a semi-statically configured downlink slot collides an uplink transmission, such as a PRACH occasion for the UE.

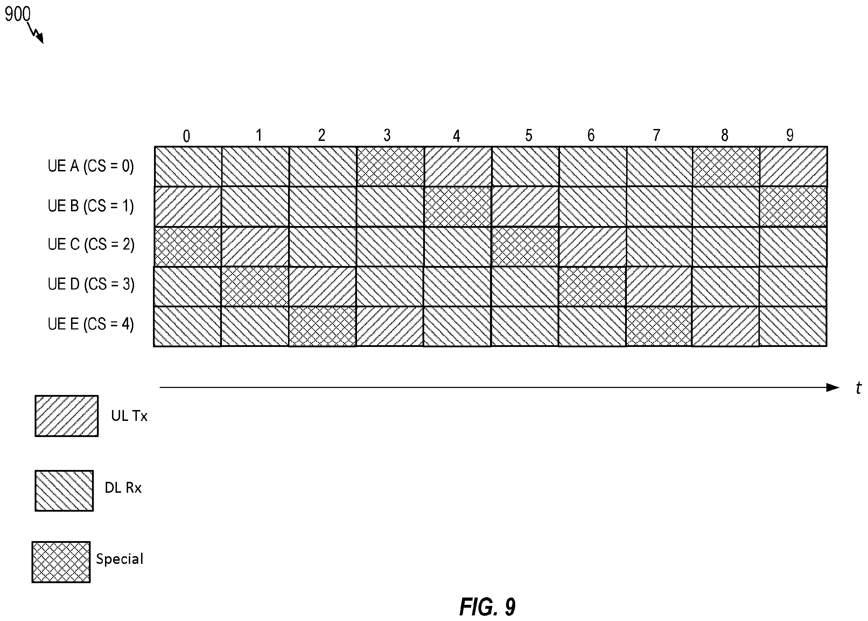

**FIG. 9** depicts example semi-static slot configurations for five UEs, in accordance with certain aspects of the present disclosure. As shown in **FIG. 9****,** UE A, UE B, UE C, UE D, and UE E are associated with a common slot format pattern DDDSU. As shown, the UEs are configured with different CSs, CS=0, CS=1, CS=2, CS=3, CS=4, respectively.

In an illustrative example, a DL cell-specific signal (e.g., an SSB) is configured in the slot 0 and an UL cell-specific signal (e.g., a PRACH occasion) is configured in the slot 2). The cell-specific signals collide with some of the UEs slot format configuration.

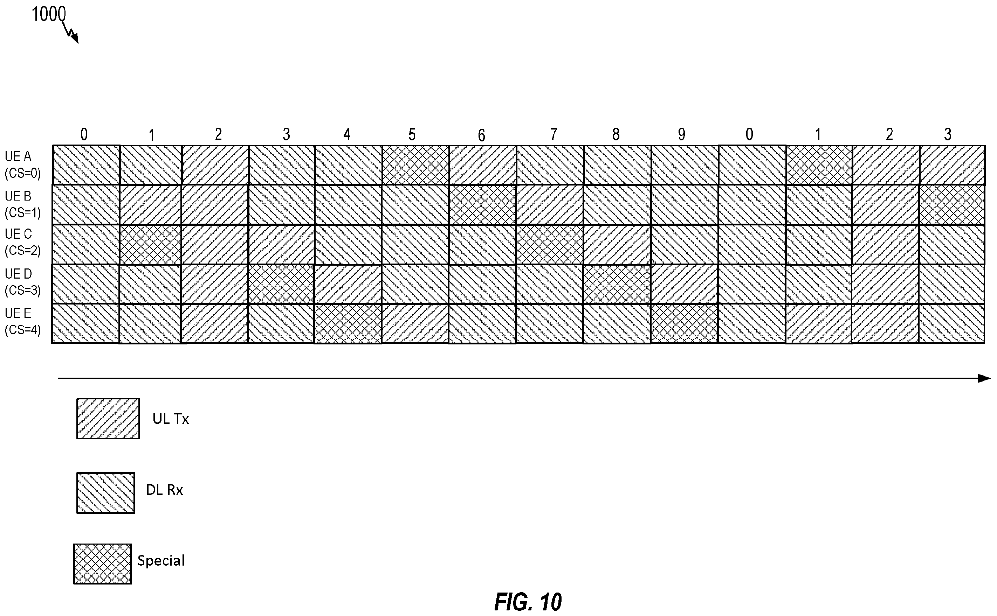

According to certain aspects, the collisions can be handled by wrapping around the semi-static slot format configuration. As shown, UE A with CS=0 is configured with slot format pattern DDDSUDDDSU in slots 0-9, respectively. With wrapping around, the UE A performs DL in slot 0 and UL in the slot 2, regardless of its semi-static slot format configuration in slot 0 and slot 2. In the next slot, UE A continues the semi-static slot configuration as though the slot format configuration was "paused" in the slot 0 and the slot 2 and then "resumed" in the next slot. For example, as shown in **FIG. 10****,** UE A performs a slot format pattern DDUDDSUDDDDSUU in the slots 0-9 and 0-3, where the UE A still follows the entire semi-static slot format pattern DDDSUDDDSU, but over an additional number four slots to account for, or "wrap around", the slot 0 and slot 2.

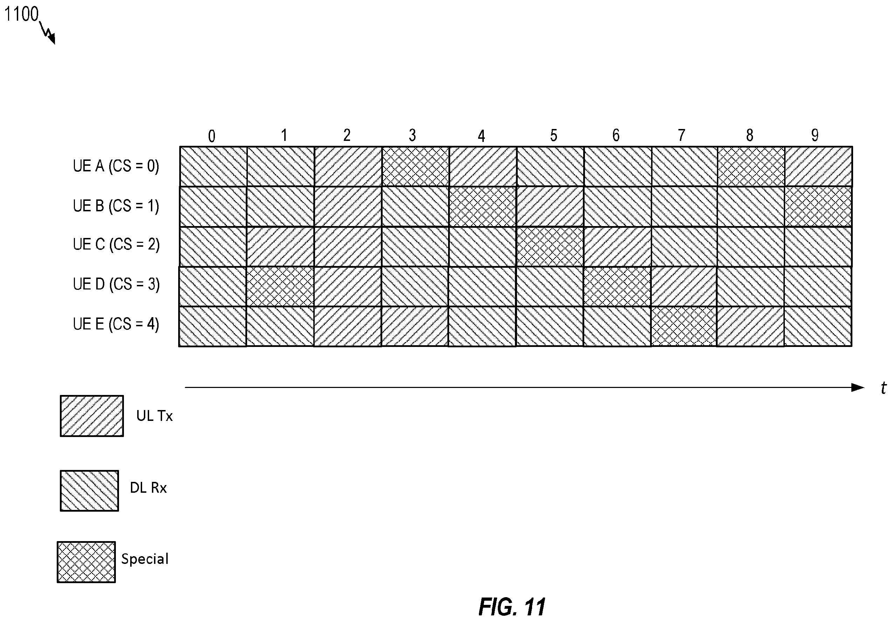

According to certain aspects, the collisions can be handled by overriding the semi-static slot format configuration. Returning to the example of UE A, with the semi-static slot format configuration of **FIG. 9****,** with override, the UE A performs UL in the slot 2, rather than the following its semi-static slot format configuration in slot 2. In the next slot, UE A continues the semi-static slot configuration with the next slot format as configured. For example, as shown in **FIG. 11****,** UE A performs a slot format pattern DDUSUDDDSU in the slots 0-9, where the UE A follows the as entire semi-static slot format pattern, but overrides the slot 2.

Extra switching gaps for DL/UL switching for the cell-specific configured slots (e.g., slot 0 and slot 2 in the illustrated example) can be created by puncturing or rate matching around the last DL symbols of a DL slot (e.g., a DL slot directly before slot 0 or slot 2), or puncturing the beginning UL symbols of a UL slot (e.g., an UL slot directly before slot 0 or slot 2).

According to certain aspects, the BS can reconfigure a semi-statically configured special slot as UL (or with UL symbols) to compensate for an over-ridden UL slot or as DL (or with DL symbols) to compensate for an over-ridden DL slot.

According to certain aspects, the BS may be configured to avoid collision of cell-specific configured transmissions and semi-static slot format configurations. For example, the BS may configure/schedule cell-specific configured transmissions, such as SSB and/or PRACH occasions and/or the BS may configure the semi-static slot format configurations for the UEs served by the BS, such that collisions are reduced or eliminated.

According to certain aspects, the BS may determine semi-static slot format configurations

According to certain aspects, when collision occurs, the UE (e.g., in the RRC connected state) can follow the semi-static slot format configuration and ignore the cell-specific configured transmission. For example, the UE can stay on UL and skip SSB-based monitoring for radio resource management (RRM) measurement and/or radio link monitoring (RLM) measurement, the UE can skip SIB decoding (e.g., if there is no change in SI and/or if the UE is operating in a BWP without configured SSB), and/or the UE can stay on DL and skip PRACH transmission (e.g., when the UE is not triggered to transmit PRACH and/or is operating in a BWP without PRACH).

According to certain aspects, the UE can fallback to DCI-based switching times. For example, the UE may follow the semi-static slot format configuration when: the UE is in the RRC connected state; when the UE's timing alignment (TA) timer is not expired; when the UE's active BWP configuration supports semi-statically configured slot format in HD-FDD operation; and when there is no collision with a measurement gap. When any of the above conditions above is violated, the UE falls back to DCI-based TX/RX switching or follows the procedures specified for measurement gap.

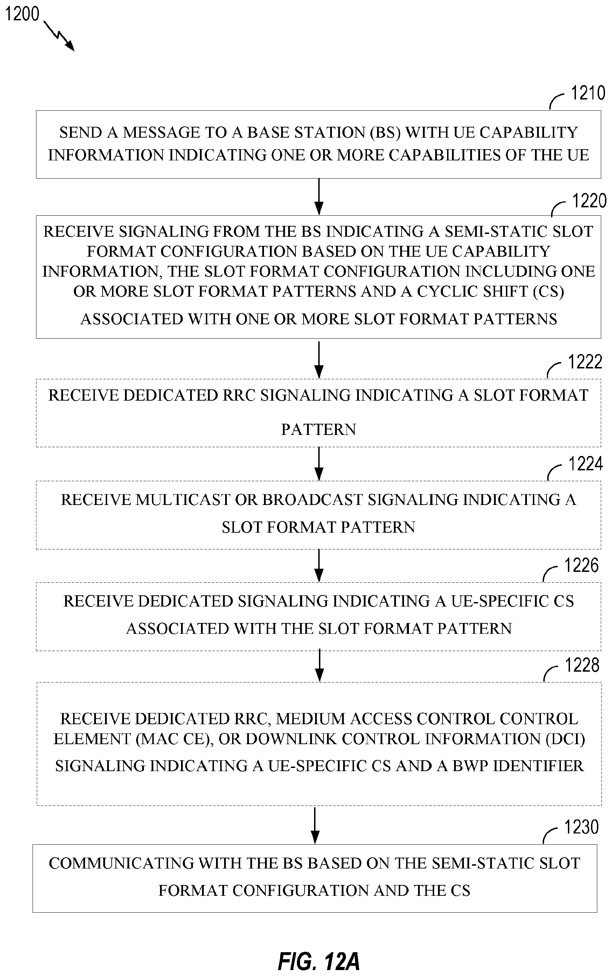

**FIG. 12A-12B** is a flow diagram illustrating example operations 1200 for wireless communication, in accordance with certain aspects of the present disclosure. Operations 1200 may be performed, for example, by a UE (such as a UE 104 in the wireless communication network 100). Operations 1200 may be implemented as software components that are executed and run on one or more processors (e.g., controller/processor 280 of **FIG. 2****).** Further, the transmission and reception of signals by the UE in operations 1200 may be enabled, for example, by one or more antennas (e.g., antennas 252 of **FIG. 2****).** In certain aspects, the transmission and/or reception of signals by the UE may be implemented via a bus interface of one or more processors (e.g., controller/processor 280) obtaining and/or outputting signals.

The operations 1200 may begin, at block 1210, by sending a message to a BS with UE capability information indicating one or more capabilities of the UE. The one or more capabilities of the UE includes a minimum switching time for switching from uplink to downlink, a minimum switching time for switching from downlink, or both. The one or more capabilities may include support for semi-static slot format configuration HD FDD. The UE may receive a request from the BS for the UE capability information, and the message to the BS with the UE capability information, at 1210, may be sent in response to the request. The UE may further send to the BS, a BSR, a CSI report, an indication for coverage enhancement, a QoS target, and/or UAI. The UE may receive a request from the BS for the BSR, CSI report, QoS target, indication for coverage enhance, and/or UAI, and the BSR, CSI report, indication for coverage enhancement, QoS target, and/or UAI may be sent in response to the request.

At 1220, the UE receives signaling from the BS indicating a semi-static slot format configuration based on the UE capability information, the slot format configuration including one or more slot format patterns and a CS associated with one or more slot format patterns. The one or more slot format patterns may be cell-specific, group common, or UE-specific. The CS granularity is at least one slot, one half-frame, or one frame. The slot format pattern may be shared with one or more other UEs and the UE and the one or more other UEs are configured with different CSs. The semi-static slot format configuration may further be based on a BSR, CSI report, indication for coverage enhancement, QoS target, and/or UAI provided by the UE to the BS.

The signaling received, at 1220, from the BS indicating the semi-static slot format configuration may be received after completing RRC setup with the BS (e.g., while the UE is in an RRC connected state). Receiving the signaling from the BS indicating the semi-static slot format configuration, at 1220, may include receiving dedicated RRC signaling indicating a slot format pattern, at 1222 and receiving dedicated RRC signaling indicating a UE-specific CS associated with the slot format pattern at 1226.

Receiving the signaling from the BS indicating the semi-static slot format configuration, at 1220, may include receiving multicast or broadcast signaling indicating a slot format pattern, at 1224, and receiving dedicated RRC signaling or DCI indicating a UE-specific CS associated with the slot format pattern, at 1226.

The one or more slot format patterns may be preconfigured at the UE. Each of the one or more slot format patterns may be associated with a downlink BWP identifier and/or an uplink BWP identifier. Receiving the signaling from the BS indicating the semi-static slot format configuration, at 1220, may include receiving dedicated RRC, MAC CE, or DCI signaling indicating a UE-specific CS and a BWP ID, at 1228.

Each slot format pattern indicates one or more downlink slots including only downlink symbols mapped a downlink frequency carrier, one or more special slots, and one or more uplink slots including only uplink symbols mapped to an uplink frequency carrier. The one or more special slots include one or more downlink symbols, one or more flexible symbols including one or more guard symbols, and one or more uplink symbols. The one or more special slots comprises a first number of symbols when a normal CP is configured and a second number of symbols when an extended CP is configured. A number of the one or more guard symbols is may be based on a minimum switching time of the UE for switching from uplink to downlink, a minimum switching time of the UE for switching from downlink, or both. At least one of the one or more special slots may include one or more flexible symbols directly between an uplink symbol and a subsequent downlink symbol.

At 1230, the UE communicates with the BS based on the semi-static slot format configuration and the CS.

At 1232, the UE may determine a conflict between a slot configured by the semi-static slot format configuration and a cell-specific configured transmission. The conflict may include a slot configured as an uplink slot or a special slot by the semi-static slot format configuration collides with a SSB resource in the slot. The conflict may include a slot configured as a downlink slot or a special slot by the semi-static slot format configuration collides with a PRACH resource in the slot. At 1234, the UE may monitor or transmit the cell-specific transmission in the slot and applies the semi-static slot format configuration in the next slot. At 1236, the UE may over-ride the semi-static slot format configuration in the slot and monitor or transmit the cell-specific transmission in the slot. At 1238, the UE may receive signaling from the BS reconfiguring a special slot in the slot format configuration to compensate for the overridden slot. The UE may be configured to not expect the conflict and, at 1240, treat as an error event when the conflict is determined. At 1242, the UE may skip monitoring or transmission of the cell-specific transmission. At 1244, the UE may puncture or rate match around one or more ending symbols or a downlink slot or beginning symbols of an uplink slot to accommodate switching due to the cell-specific transmission.

At 1246, the UE may ignore the semi-static slot format configuration and monitor DCI including measurement gap information for uplink downlink switching or downlink uplink switching when at least one of the following occurs: the UE is not in a RRC connected state; the UE's timing alignment timer expires; the UE's active BWP configuration does not support the semi-static slot format configuration; or the semi-static slot format configuration collides with a configured measurement gap.

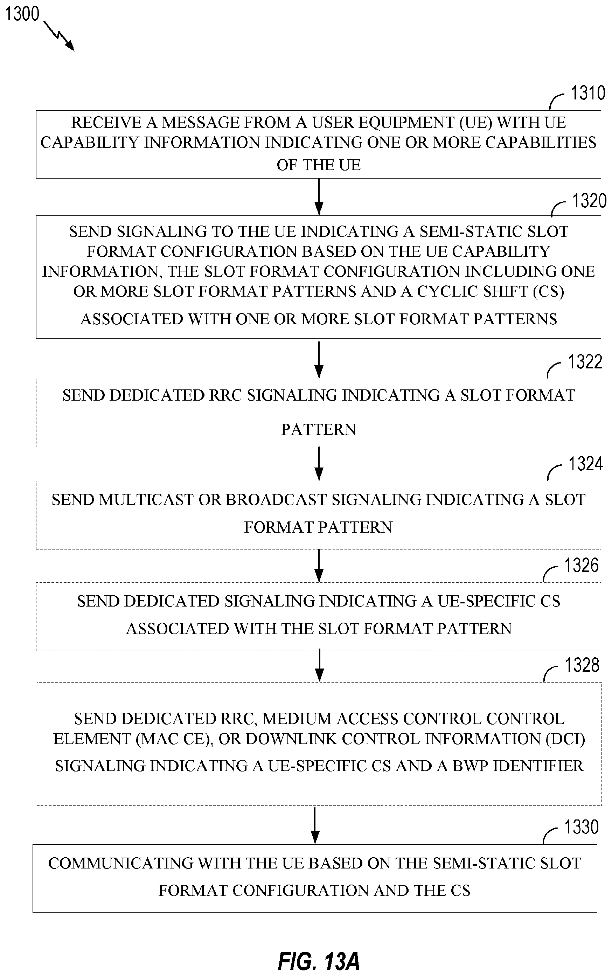

**FIG. 13A-13B** is a flow diagram illustrating example operations 1300 for wireless communication, in accordance with certain aspects of the present disclosure. Operations 1300 may be performed, for example, by a BS (such as a BS 102 in the wireless communication network 100). Operations 1300 may be complementary to the operations 1200 performed by the UE. Operations 1300 may be implemented as software components that are executed and run on one or more processors (e.g., controller/processor 240 of **FIG. 2****).** Further, the transmission and reception of signals by the BS in operations 1300 may be enabled, for example, by one or more antennas (e.g., antennas 234 of **FIG. 2****).** In certain aspects, the transmission and/or reception of signals by the BS may be implemented via a bus interface of one or more processors (e.g., controller/processor 240) obtaining and/or outputting signals.

The operations 1300 may begin, at block 1310, by receiving a message from a UE) with UE capability information indicating one or more capabilities of the UE. The one or more capabilities of the UE includes a minimum switching time for switching from uplink to downlink, a minimum switching time for switching from downlink, or both. The one or more capabilities may include support for semi-static slot format configuration HD FDD. The BS may send a request to the UE for the UE capability information, and the message from the UE with the UE capability information, at 1310, may be received in response to the request. The BS may further receive from the UE, a BSR, a CSI report, an indication for coverage enhancement, a QoS target, and/or UAI. The BS may send the UE a request for the BSR, CSI report, QoS target, indication for coverage enhance, and/or UAI, and the BSR, CSI report, indication for coverage enhancement, QoS target, and/or UAI may be received in response to the request.

At 1320, the BS sends signaling to the UE indicating a semi-static slot format configuration based on the UE capability information, the slot format configuration including one or more slot format patterns and a CS associated with one or more slot format patterns. The one or more slot format patterns may be cell-specific, group common, or UE-specific. The CS granularity is at least one slot, one half-frame, or one frame. The slot format pattern may be shared with one or more other UEs and the UE and the one or more other UEs are configured with different CSs. The semi-static slot format configuration may further be based on a BSR, CSI report, indication for coverage enhancement, QoS target, and/or UAI provided by the UE to the BS.

The signaling sent, at 1320, from the BS indicating the semi-static slot format configuration may be sent after completing RRC setup with the BS (e.g., while the UE is in an RRC connected state). Sending the signaling to the UE indicating the semi-static slot format configuration, at 1320, may include sending dedicated RRC signaling indicating a slot format pattern, at 1322 and sending dedicated RRC signaling indicating a UE-specific CS associated with the slot format pattern at 1326.

Sending the signaling to the UE indicating the semi-static slot format configuration, at 1320, may include sending multicast or broadcast signaling indicating a slot format pattern, at 1324, and sending dedicated RRC signaling or DCI indicating a UE-specific CS associated with the slot format pattern, at 1326.

The one or more slot format patterns may be preconfigured at the UE. Each of the one or more slot format patterns may be associated with a downlink BWP identifier and/or an uplink BWP identifier. Sending the signaling from the BS indicating the semi-static slot format configuration, at 1320, may include sending dedicated RRC, MAC CE, or DCI signaling indicating a UE-specific CS and a BWP ID, at 1328.

Each slot format pattern indicates one or more downlink slots including only downlink symbols mapped a downlink frequency carrier, one or more special slots, and one or more uplink slots including only uplink symbols mapped to an uplink frequency carrier. The one or more special slots include one or more downlink symbols, one or more flexible symbols including one or more guard symbols, and one or more uplink symbols. The one or more special slots comprises a first number of symbols when a normal CP is configured and a second number of symbols when an extended CP is configured. A number of the one or more guard symbols is may be based on a minimum switching time of the UE for switching from uplink to downlink, a minimum switching time of the UE for switching from downlink, or both. At least one of the one or more special slots may include one or more flexible symbols directly between an uplink symbol and a subsequent downlink symbol.

At 1330, the BS communicates with the UE based on the semi-static slot format configuration and the CS.

At 1332, the BS may determine a conflict between a slot configured by the semi-static slot format configuration and a cell-specific configured transmission. The conflict may include a slot configured as an uplink slot or a special slot by the semi-static slot format configuration collides with a SSB resource in the slot. The conflict may include a slot configured as a downlink slot or a special slot by the semi-static slot format configuration collides with a PRACH resource in the slot. At 1334, the BS may monitor or transmit the cell-specific transmission in the slot and applies the semi-static slot format configuration in the next slot. At 1336, the BS may over-ride the semi-static slot format configuration in the slot and monitor or transmit the cell-specific transmission in the slot. At 1338, the BS may send signaling to the UE reconfiguring a special slot in the slot format configuration to compensate for the overridden slot. The BS may configure, at 1340, the semi-static slot format configurations such that collision does not occur. At 1342, the BS may skip monitoring or transmission of the cell-specific transmission. At 1344, the UE may puncture or rate match around one or more ending symbols or a downlink slot or beginning symbols of an uplink slot to accommodate switching due to the cell-specific transmission.

At 1346, the UE may ignore the semi-static slot format configuration and monitor DCI including measurement gap information for uplink downlink switching or downlink uplink switching when at least one of the following occurs: the UE is not in a RRC connected state; the UE's timing alignment timer expires; the UE's active BWP configuration does not support the semi-static slot format configuration; or the semi-static slot format configuration collides with a configured measurement gap.

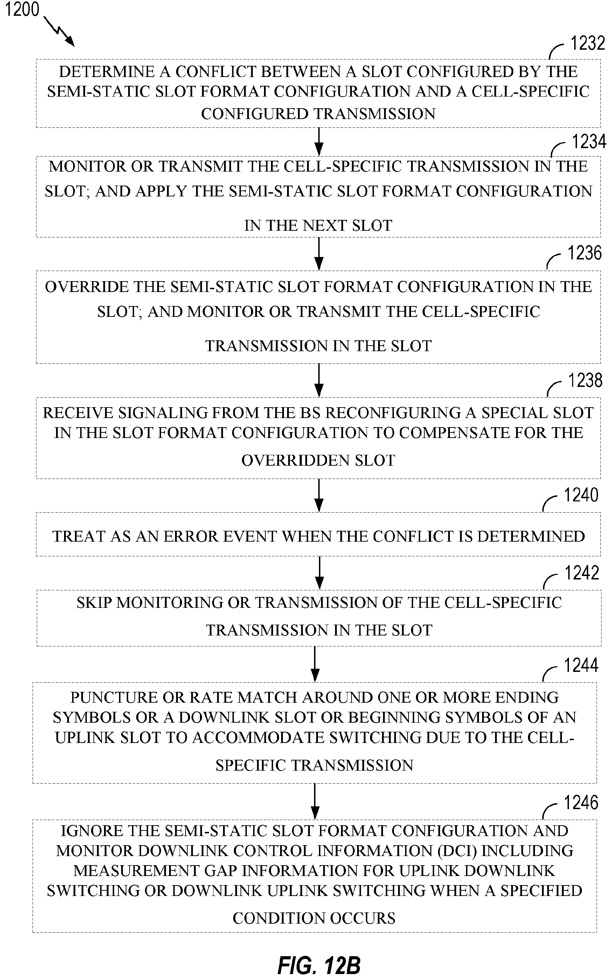

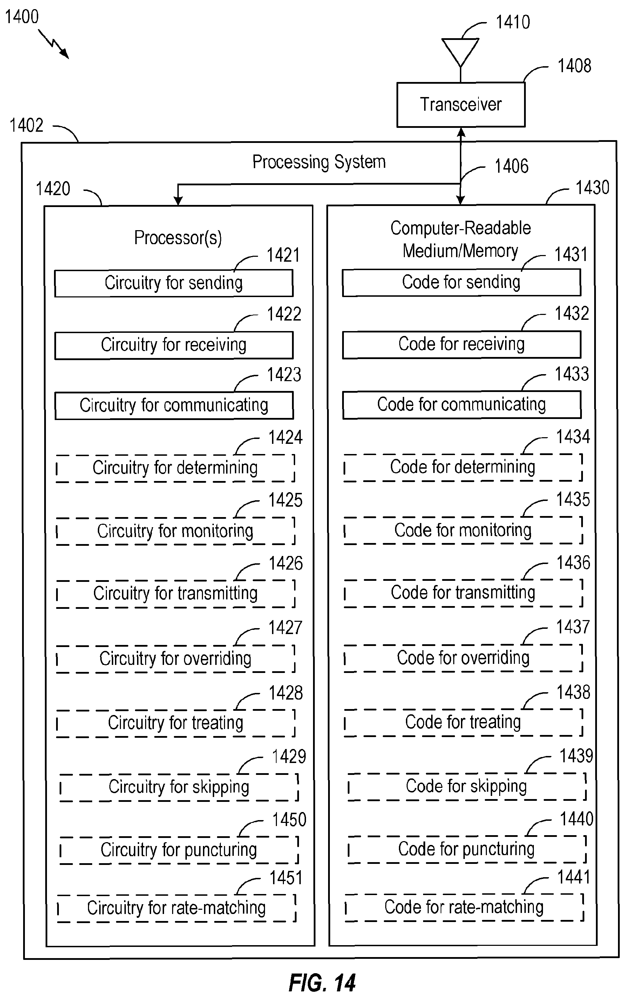

**FIG. 14** illustrates a communications device 1400 that may include various components (e.g., corresponding to means-plus-function components) configured to perform operations for the techniques disclosed herein, such as the operations illustrated in **FIG. 12****.** The communications device 1400 includes a processing system 1402 coupled to a transceiver 1408 (e.g., a transmitter and/or a receiver). The transceiver 1408 is configured to transmit and receive signals for the communications device 1400 via an antenna 1410, such as the various signals as described herein. The processing system 1402 may be configured to perform processing functions for the communications device 1400, including processing signals received and/or to be transmitted by the communications device 1400.

The processing system 1402 includes processor(s) 1420 coupled to a computer-readable medium/memory 1340 via a bus 1406. In certain aspects, the computer-readable medium/memory 1430 is configured to store instructions (e.g., computer-executable code) that when executed by processor(s) 1420, cause the processor(s) 1420 to perform the operations illustrated in **FIGs. 12A-B**, or other operations for performing the various techniques discussed herein for semi-static slot format configuration. In certain aspects, computer-readable medium/memory 1430 stores code 1431 for sending; code 1432 for receiving; code 1433 for communicating; code 1434 for determining; code 1435 for monitoring; code 1436 for transmitting; code 1437 for overriding; code 1438 for treating; code 1439 for skipping; code 1440 for puncturing; and/or code 1441 for rate-matching. In certain aspects, the processor(s) 1420 has circuitry 1421-1429, 1450, and 1451 configured to implement the code stored in the computer-readable medium/memory 1430.

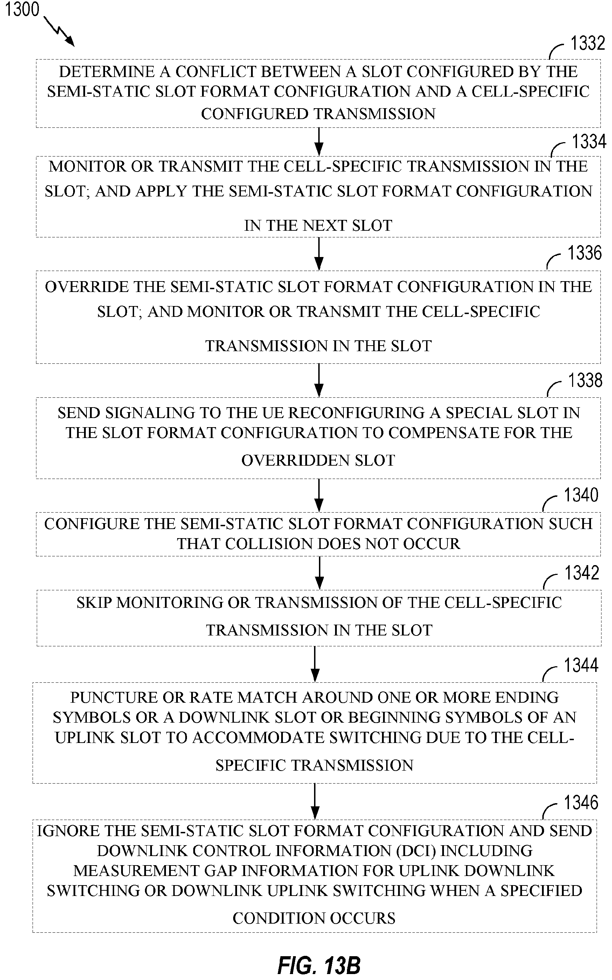

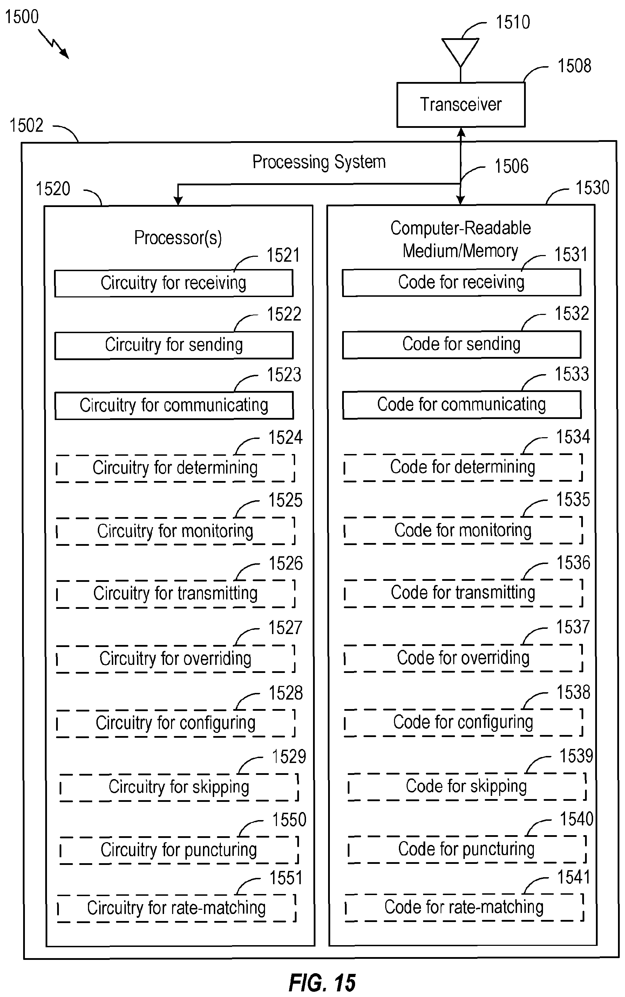

**FIG. 15** illustrates a communications device 1500 that may include various components (e.g., corresponding to means-plus-function components) configured to perform operations for the techniques disclosed herein, such as the operations illustrated in **FIG. 13****.** The communications device 1500 includes a processing system 1502 coupled to a transceiver 1508 (e.g., a transmitter and/or a receiver). The transceiver 1508 is configured to transmit and receive signals for the communications device 1500 via an antenna 1510, such as the various signals as described herein. The processing system 1502 may be configured to perform processing functions for the communications device 1500, including processing signals received and/or to be transmitted by the communications device 1500.

The processing system 1502 includes processor(s) 1520 coupled to a computer-readable medium/memory 1530 via a bus 1506. In certain aspects, the computer-readable medium/memory 1530 is configured to store instructions (e.g., computer-executable code) that when executed by the processor(s) 1520, cause the processor(s) 1520 to perform the operations illustrated in **FIGs. 13A-B**, or other operations for performing the various techniques discussed herein for a semi-static slot format configuration. In certain aspects, computer-readable medium/memory 1530 stores code 1531 for receiving; code 1532 for sending; code 1533 for communicating; code 1534 for determining; code 1535 for monitoring; code 1536 for transmitting; code 1537 for overriding; code 1538 for configuring; code 1539 for skipping; code 1540 for puncturing; and/or code 1541 for rate-matching. In certain aspects, the processor(s) 1520 has circuitry 1521-1529, 1550, and 1551 configured to implement the code stored in the computer-readable medium/memory 1530.

### Example Aspects

In addition to the various aspects described above, the aspects can be combined. Some specific combinations of aspects are detailed below:
Aspect 1. A method for wireless communications by a user equipment (UE), comprising: sending a message to a base station (BS) with UE capability information indicating one or more capabilities of the UE; receiving signaling from the BS indicating a semi-static slot format configuration based on the UE capability information, the slot format configuration including one or more slot format patterns and a cyclic shift (CS) associated with one or more slot format patterns; and communicating with the BS based on the semi-static slot format configuration and the CS.

### Additional Wireless Communication Network Aspects

In general, any number of wireless networks may be deployed in a given geographic area. Each wireless network may support a particular radio access technology (RAT) and may operate on one or more frequencies. A RAT may also be referred to as a radio technology, an air interface, etc. A frequency may also be referred to as a carrier, a subcarrier, a frequency channel, a tone, a subband, etc. Each frequency may support a single RAT in a given geographic area in order to avoid interference between wireless networks of different RATs.

The techniques and methods described herein may be used for various wireless communications networks (or wireless wide area network (WWAN)) and radio access technologies (RATs). While aspects may be described herein using terminology commonly associated with 3G, 4G, and/or 5G (e.g., 5G new radio (NR)) wireless technologies, aspects of the present disclosure may likewise be applicable to other communication systems and standards not explicitly mentioned herein.

5G wireless communication networks may support various advanced wireless communication services, such as enhanced mobile broadband (eMBB), millimeter wave (mmWave), machine type communications (MTC), and/or mission critical targeting ultra-reliable, low-latency communications (URLLC). These services, and others, may include latency and reliability requirements. In addition, these service may co-exist in the same subframe.

Returning to **FIG. 1****,** various aspects of the present disclosure may be performed within the example wireless communication network 100.

In 3GPP, the term "cell" can refer to a coverage area of a Node B (NB) and/or a NB subsystem serving this coverage area, depending on the context in which the term is used. A macro cell may generally cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having an association with the femto cell (e.g., UEs in a Closed Subscriber Group (CSG) and UEs for users in the home). A BS for a macro cell may be referred to as a macro BS. A BS for a pico cell may be referred to as a pico BS. A BS for a femto cell may be referred to as a femto BS or a home BS.

BS 102 configured for 4G LTE (collectively referred to as Evolved Universal Mobile Telecommunications System (UMTS) Terrestrial Radio Access Network (E-UTRAN)) may interface with the EPC 160 through first backhaul links 132 (e.g., an S1 interface). BSs 102 configured for 5G (e.g., 5G NR or Next Generation RAN (NG-RAN)) may interface with core network 190 through second backhaul links 184. BSs 102 may communicate directly or indirectly (e.g., through the EPC 160 or core network 190) with each other over third backhaul links 134 (e.g., X2 interface). Third backhaul links 134 may generally be wired or wireless.

Small cell 102' may operate in a licensed and/or an unlicensed frequency spectrum. When operating in an unlicensed frequency spectrum, the small cell 102' may employ NR and use the same 5 GHz unlicensed frequency spectrum as used by the Wi-Fi AP 150. Small cell 102', employing NR in an unlicensed frequency spectrum, may boost coverage to and/or increase capacity of the access network.

In wireless communications, an electromagnetic spectrum is often subdivided, into various classes, bands, channels, or other features. The subdivision is often provided based on wavelength and frequency, where frequency may also be referred to as a carrier, a subcarrier, a frequency channel, a tone, or a subband.

In 5G, two initial operating bands have been identified as frequency range designations FR1 (410 MHz - 7.125 GHz) and FR2 (24.25 GHz - 52.6 GHz). The frequencies between FR1 and FR2 are often referred to as mid-band frequencies. Although a portion of FR1 is greater than 6 GHz, FR1 is often referred to (interchangeably) as a "Sub-6 GHz" band in various documents and articles. A similar nomenclature issue sometimes occurs with regard to FR2, which is sometimes referred to (interchangeably) as a "millimeter wave" ("mmW" or "mmWave") band in documents and articles, despite being different from the extremely high frequency (EHF) band (30 GHz - 300 GHz), which is identified by the International Telecommunications Union (ITU) as a "millimeter wave" band because wavelengths at these frequencies are between 1 millimeter and 10 millimeters. Radio waves in the band may be referred to as a millimeter wave. Near mmWave may extend down to a frequency of 3 GHz with a wavelength of 100 millimeters. The super high frequency (SHF) band extends between 3 GHz and 30 GHz, also referred to as centimeter wave.

With the above aspects in mind, unless specifically stated otherwise, it should be understood that the term "sub-6 GHz" or the like if used herein may broadly represent frequencies that may be less than 6 GHz, may be within FR1, or may include mid-band frequencies. Further, unless specifically stated otherwise, it should be understood that the term "millimeter wave" or the like if used herein may broadly represent frequencies that may include mid-band frequencies, may be within FR2, or may be within the EHF band.

Communications using the mmWave / near mmWave radio frequency band (e.g., 3 GHz - 300 GHz) may have higher path loss and a shorter range compared to lower frequency communications. Accordingly, in **FIG. 1****,** BS 180 may utilize beamforming 182 with the UE 104 to improve path loss and range. To do so, BS 180 and the UE 104 may each include a plurality of antennas, such as antenna elements, antenna panels, and/or antenna arrays to facilitate the beamforming.

In some cases, BS 180 may transmit a beamformed signal to UE 104 in one or more transmit directions 182'. UE 104 may receive the beamformed signal from the BS 180 in one or more receive directions 182". UE 104 may also transmit a beamformed signal to the BS 180 in one or more transmit directions 182''. BS 180 may receive the beamformed signal from UE 104 in one or more receive directions 182'. BS 180 and UE 104 may then perform beam training to determine the best receive and transmit directions for each of BS 180 and UE 104. Notably, the transmit and receive directions for BS 180 may or may not be the same. Similarly, the transmit and receive directions for UE 104 may or may not be the same.

Some BSs, such as BS 180 may operate in a traditional sub-6 GHz spectrum, in millimeter wave (mmWave) frequencies, and/or near mmWave frequencies in communication with the UE 104. When the gNB 180 operates in mmWave or near mmWave frequencies, the BS 180 may be referred to as an mmWave BS.

The communication links 120 between BSs 102 and, for example, UEs 104, may be through one or more carriers. For example, BSs102 and UEs 104 may use spectrum up to *Y* MHz (e.g., 5, 10, 15, 20, 100, 400, and other MHz) bandwidth per carrier allocated in a carrier aggregation of up to a total of *Yx* MHz (*x* component carriers) used for transmission in each direction. The carriers may or may not be adjacent to each other. Allocation of carriers may be asymmetric with respect to DL and UL (e.g., more or fewer carriers may be allocated for DL than for UL). The component carriers (CCs) may include a primary component carrier (PCC) and one or more secondary component carriers (SCCs). A PCC may be referred to as a primary cell (PCell) and a SCC may be referred to as a secondary cell (SCell).

Wireless communications system 100 further includes a Wi-Fi access point (AP) 150 in communication with Wi-Fi stations (STAs) 152 via communication links 154 in, for example, a 2.4 GHz and/or 5 GHz unlicensed frequency spectrum. When communicating in an unlicensed frequency spectrum, the STAs 152 / AP 150 may perform a clear channel assessment (CCA) prior to communicating in order to determine whether the channel is available.

Certain UEs 104 may communicate with each other using device-to-device (D2D) communication link 158. The D2D communication link 158 may use the DL/UL WWAN spectrum. The D2D communication link 158 may use one or more sidelink channels, such as a physical sidelink broadcast channel (PSBCH), a physical sidelink discovery channel (PSDCH), a physical sidelink shared channel (PSSCH), and a physical sidelink control channel (PSCCH). D2D communication may be through a variety of wireless D2D communications systems, such as for example, FlashLinQ, WiMedia, Bluetooth, ZigBee, Wi-Fi based on the IEEE 802.11 standard, 4G (e.g., LTE), or 5G (e.g., NR), to name a few options.

EPC 160 may include a Mobility Management Entity (MME) 162, other MMEs 164, a Serving Gateway 166, a Multimedia Broadcast Multicast Service (MBMS) Gateway 168, a Broadcast Multicast Service Center (BM-SC) 170, and a Packet Data Network (PDN) Gateway 172. MME 162 may be in communication with a Home Subscriber Server (HSS) 174. MME 162 is the control node that processes the signaling between the UEs 104 and the EPC 160. Generally, MME 162 provides bearer and connection management.

Generally, user Internet protocol (IP) packets are transferred through Serving Gateway 166, which itself is connected to PDN Gateway 172. PDN Gateway 172 provides UE IP address allocation as well as other functions. PDN Gateway 172 and the BM-SC 170 are connected to the IP Services 176, which may include, for example, the Internet, an intranet, an IP Multimedia Subsystem (IMS), a PS Streaming Service, and/or other IP services.

BM-SC 170 may provide functions for MBMS user service provisioning and delivery. BM-SC 170 may serve as an entry point for content provider MBMS transmission, may be used to authorize and initiate MBMS Bearer Services within a public land mobile network (PLMN), and may be used to schedule MBMS transmissions. MBMS Gateway 168 may be used to distribute MBMS traffic to the base stations 102 belonging to a Multicast Broadcast Single Frequency Network (MBSFN) area broadcasting a particular service, and may be responsible for session management (start/stop) and for collecting eMBMS related charging information.

Core network 190 may include an Access and Mobility Management Function (AMF) 192, other AMFs 193, a Session Management Function (SMF) 194, and a User Plane Function (UPF) 195. AMF 192 may be in communication with a Unified Data Management (UDM) 196.

AMF 192 is generally the control node that processes the signaling between UEs 104 and core network 190. Generally, AMF 192 provides QoS flow and session management.

All user Internet protocol (IP) packets are transferred through UPF 195, which is connected to the IP Services 197, and which provides UE IP address allocation as well as other functions for core network 190. IP Services 197 may include, for example, the Internet, an intranet, an IP Multimedia Subsystem (IMS), a PS Streaming Service, and/or other IP services.

Returning to **FIG. 2****,** various example components of BS 102 and UE 104 (e.g., the wireless communication network 100 of **FIG. 1****)** are depicted, which may be used to implement aspects of the present disclosure.

At BS 102, a transmit processor 220 may receive data from a data source 212 and control information from a controller/processor 240. The control information may be for the physical broadcast channel (PBCH), physical control format indicator channel (PCFICH), physical hybrid ARQ indicator channel (PHICH), physical downlink control channel (PDCCH), group common PDCCH (GC PDCCH), and others. The data may be for the physical downlink shared channel (PDSCH), in some examples.

A medium access control (MAC)-control element (MAC-CE) is a MAC layer communication structure that may be used for control command exchange between wireless nodes. The MAC-CE may be carried in a shared channel such as a PDSCH, a physical uplink shared channel (PUSCH), or a physical sidelink shared channel (PSSCH).

Processor 220 may process (e.g., encode and symbol map) the data and control information to obtain data symbols and control symbols, respectively. Transmit processor 220 may also generate reference symbols, such as for the primary synchronization signal (PSS), secondary synchronization signal (SSS), PBCH demodulation reference signal (DMRS), and channel state information reference signal (CSI-RS).

Transmit (TX) multiple-input multiple-output (MIMO) processor 230 may perform spatial processing (e.g., precoding) on the data symbols, the control symbols, and/or the reference symbols, if applicable, and may provide output symbol streams to the modulators (MODs) in transceivers 232a-232t. Each modulator in transceivers 232a-232t may process a respective output symbol stream (e.g., for OFDM) to obtain an output sample stream. Each modulator may further process (e.g., convert to analog, amplify, filter, and upconvert) the output sample stream to obtain a downlink signal. Downlink signals from the modulators in transceivers 232a-232t may be transmitted via the antennas 234a-234t, respectively.

At UE 104, antennas 252a-252r may receive the downlink signals from the BS 102 and may provide received signals to the demodulators (DEMODs) in transceivers 254a-254r, respectively. Each demodulator in transceivers 254a-254r may condition (e.g., filter, amplify, downconvert, and digitize) a respective received signal to obtain input samples. Each demodulator may further process the input samples (e.g., for OFDM) to obtain received symbols.

MIMO detector 256 may obtain received symbols from all the demodulators in transceivers 254a-254r, perform MIMO detection on the received symbols if applicable, and provide detected symbols. Receive processor 258 may process (e.g., demodulate, deinterleave, and decode) the detected symbols, provide decoded data for the UE 104 to a data sink 260, and provide decoded control information to a controller/processor 280.

On the uplink, at UE 104, transmit processor 264 may receive and process data (e.g., for the PUSCH) from a data source 262 and control information (e.g., for the physical uplink control channel (PUCCH) from the controller/processor 280. Transmit processor 264 may also generate reference symbols for a reference signal (e.g., for the sounding reference signal (SRS)). The symbols from the transmit processor 264 may be precoded by a TX MIMO processor 266 if applicable, further processed by the modulators in transceivers 254a-254r (e.g., for SC-FDM), and transmitted to BS 102.

At BS 102, the uplink signals from UE 104 may be received by antennas 234a-t, processed by the demodulators in transceivers 232a-232t, detected by a MIMO detector 236 if applicable, and further processed by a receive processor 238 to obtain decoded data and control information sent by UE 104. Receive processor 238 may provide the decoded data to a data sink 239 and the decoded control information to the controller/processor 240.

Memories 242 and 282 may store data and program codes for BS 102 and UE 104, respectively.

Scheduler 244 may schedule UEs for data transmission on the downlink and/or uplink.

As above, **FIGS. 3A-3D** depict various example aspects of data structures for a wireless communication network, such as wireless communication network 100 of **FIG. 1****.**

In various aspects, the 5G frame structure may be frequency division duplex (FDD), in which for a particular set of subcarriers (carrier system bandwidth), subframes within the set of subcarriers are dedicated for either DL or UL. 5G frame structures may also be TDD, in which for a particular set of subcarriers (carrier system bandwidth), subframes within the set of subcarriers are dedicated for both DL and UL. In the examples provided by **FIGS. 3A** and **3C****,** the 5G frame structure is assumed to be TDD, with subframe 4 being configured with slot format 28 (with mostly DL), where D is DL, U is UL, and X is flexible for use between DL/UL, and subframe 3 being configured with slot format 34 (with mostly UL). While subframes 3, 4 are shown with slot formats 34, 28, respectively, any particular subframe may be configured with any of the various available slot formats 0-61. Slot formats 0, 1 are all DL, UL, respectively. Other slot formats 2-61 include a mix of DL, UL, and flexible symbols. UEs are configured with the slot format (dynamically through DL control information (DCI), or semi-statically/statically through radio resource control (RRC) signaling) through a received slot format indicator (SFI).

For example, for slot configuration 0, each slot may include 14 symbols, and for slot configuration 1, each slot may include 7 symbols. The symbols on DL may be cyclic prefix (CP) OFDM (CP-OFDM) symbols. The symbols on UL may be CP-OFDM symbols (for high throughput scenarios) or discrete Fourier transform (DFT) spread OFDM (DFT-s-OFDM) symbols (also referred to as single carrier frequency-division multiple access (SC-FDMA) symbols) (for power limited scenarios; limited to a single stream transmission).

The number of slots within a subframe is based on the slot configuration and the numerology. For slot configuration 0, different numerologies (µ) 0 to 5 allow for 1, 2, 4, 8, 16, and 32 slots, respectively, per subframe. For slot configuration 1, different numerologies 0 to 2 allow for 2, 4, and 8 slots, respectively, per subframe. Accordingly, for slot configuration 0 and numerology µ, there are 14 symbols/slot and 2µ slots/subframe. The subcarrier spacing (SCS) and symbol length/duration are a function of the numerology. The subcarrier spacing may be equal to 2^{µ} × 15 kHz, where µ is the numerology 0 to 5. As such, the numerology µ = 0 has a subcarrier spacing of 15 kHz and the numerology µ = 5 has a subcarrier spacing of 480 kHz. The symbol length/duration is inversely related to the subcarrier spacing. **FIGS. 3A-3D** provide an example of slot configuration 0 with 14 symbols per slot and numerology µ = 2 with 4 slots per subframe. The slot duration is 0.25 ms, the subcarrier spacing is 60 kHz, and the symbol duration is approximately 16.67 µs.

A resource grid may be used to represent the frame structure. Each time slot includes a resource block (RB) (also referred to as physical RBs (PRBs)) that extends 12 consecutive subcarriers. The resource grid is divided into multiple resource elements (REs). The number of bits carried by each RE depends on the modulation scheme.

As illustrated in **FIG. 3A****,** some of the REs carry reference (pilot) signals (RS) for a UE (e.g., UE 104 of **FIGS. 1** and **2****)**. The RS may include demodulation RS (DM-RS) (indicated as Rx for one particular configuration, where 100x is the port number, but other DM-RS configurations are possible) and channel state information reference signals (CSI-RS) for channel estimation at the UE. The RS may also include beam measurement RS (BRS), beam refinement RS (BRRS), and phase tracking RS (PT-RS).

**FIG. 3B** illustrates an example of various DL channels within a subframe of a frame. The physical downlink control channel (PDCCH) carries DCI within one or more control channel elements (CCEs), each CCE including nine RE groups (REGs), each REG including four consecutive REs in an OFDM symbol.

A primary synchronization signal (PSS) may be within symbol 2 of particular subframes of a frame. The PSS is used by a UE (e.g., 104 of **FIGS. 1** and **2****)** to determine subframe/symbol timing and a physical layer identity.

A secondary synchronization signal (SSS) may be within symbol 4 of particular subframes of a frame. The SSS is used by a UE to determine a physical layer cell identity group number and radio frame timing.

Based on the physical layer identity and the physical layer cell identity group number, the UE can determine a physical cell identifier (PCI). Based on the PCI, the UE can determine the locations of the aforementioned DM-RS. The physical broadcast channel (PBCH), which carries a master information block (MIB), may be logically grouped with the PSS and SSS to form a synchronization signal (SS)/PBCH block. The MIB provides a number of RBs in the system bandwidth and a system frame number (SFN). The physical downlink shared channel (PDSCH) carries user data, broadcast system information not transmitted through the PBCH such as system information blocks (SIBs), and paging messages.

As illustrated in **FIG. 3C****,** some of the REs carry DM-RS (indicated as R for one particular configuration, but other DM-RS configurations are possible) for channel estimation at the base station. The UE may transmit DM-RS for the physical uplink control channel (PUCCH) and DM-RS for the physical uplink shared channel (PUSCH). The PUSCH DM-RS may be transmitted in the first one or two symbols of the PUSCH. The PUCCH DM-RS may be transmitted in different configurations depending on whether short or long PUCCHs are transmitted and depending on the particular PUCCH format used. The UE may transmit sounding reference signals (SRS). The SRS may be transmitted in the last symbol of a subframe. The SRS may have a comb structure, and a UE may transmit SRS on one of the combs. The SRS may be used by a base station for channel quality estimation to enable frequency-dependent scheduling on the UL.

**FIG. 3D** illustrates an example of various UL channels within a subframe of a frame. The PUCCH may be located as indicated in one configuration. The PUCCH carries uplink control information (UCI), such as scheduling requests, a channel quality indicator (CQI), a precoding matrix indicator (PMI), a rank indicator (RI), and HARQ ACK/NACK feedback. The PUSCH carries data, and may additionally be used to carry a buffer status report (BSR), a power headroom report (PHR), and/or UCI.

### Additional Considerations

The preceding description provides examples of semi-static slot configuration in communication systems, such as half-duplex frequency division duplexing (HDD) new radio (NR) systems. The preceding description is provided to enable any person skilled in the art to practice the various aspects described herein.

The techniques described herein may be used for various wireless communication technologies, such as 5G (e.g., 5G NR), 3GPP Long Term Evolution (LTE), LTE-Advanced (LTE-A), code division multiple access (CDMA), time division multiple access (TDMA), frequency division multiple access (FDMA), orthogonal frequency division multiple access (OFDMA), single-carrier frequency division multiple access (SC-FDMA), time division synchronous code division multiple access (TD-SCDMA), and other networks. The terms "network" and "system" are often used interchangeably. A CDMA network may implement a radio technology such as Universal Terrestrial Radio Access (UTRA), cdma2000, and others. UTRA includes Wideband CDMA (WCDMA) and other variants of CDMA. cdma2000 covers IS-2000, IS-95 and IS-856 standards. A TDMA network may implement a radio technology such as Global System for Mobile Communications (GSM). An OFDMA network may implement a radio technology such as NR (e.g. 5G RA), Evolved UTRA (E-UTRA), Ultra Mobile Broadband (UMB), IEEE 802.11 (Wi-Fi), IEEE 802.16 (WiMAX), IEEE 802.20, Flash-OFDMA, and others. UTRA and E-UTRA are part of Universal Mobile Telecommunication System (UMTS). LTE and LTE-A are releases of UMTS that use E-UTRA. UTRA, E-UTRA, UMTS, LTE, LTE-A and GSM are described in documents from an organization named "3rd Generation Partnership Project" (3GPP). cdma2000 and UMB are described in documents from an organization named "3rd Generation Partnership Project 2" (3GPP2). NR is an emerging wireless communications technology under development.

The methods disclosed herein comprise one or more steps or actions for achieving the methods. The method steps and/or actions may be interchanged with one another. In other words, unless a specific order of steps or actions is specified, the order and/or use of specific steps and/or actions may be modified.

As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

As used herein, the term "determining" encompasses a wide variety of actions. For example, "determining" may include calculating, computing, processing, deriving, investigating, looking up (e.g., looking up in a table, a database or another data structure), ascertaining and the like. Also, "determining" may include receiving (e.g., receiving information), accessing (e.g., accessing data in a memory) and the like. Also, "determining" may include resolving, selecting, choosing, establishing and the like.

The previous description is provided to enable any person skilled in the art to practice the various aspects described herein. Reference to an element in the singular is not intended to mean "one and only one" unless specifically so stated, but rather "one or more." Unless specifically stated otherwise, the term "some" refers to one or more. All structural and functional equivalents to the elements of the various aspects described throughout this disclosure that are known or later come to be known to those of ordinary skill in the art are expressly incorporated herein by reference and are intended to be encompassed by the claims. Moreover, nothing disclosed herein is intended to be dedicated to the public regardless of whether such disclosure is explicitly recited in the claims. No claim element is to be construed under the provisions of 35 U.S.C. §112(f) unless the element is expressly recited using the phrase "means for" or, in the case of a method claim, the element is recited using the phrase "step for."

The various operations of methods described above may be performed by any suitable means capable of performing the corresponding functions. The means may include various hardware and/or software component(s) and/or module(s), including, but not limited to a circuit, a digital signal processor (DSP), an application specific integrated circuit (ASIC), or a processor (e.g., a general purpose or specifically programmed processor). Generally, where there are operations illustrated in figures, those operations may have corresponding counterpart means-plus-function components with similar numbering.

The various illustrative logical blocks, modules and circuits described in connection with the present disclosure may be implemented or performed with a general purpose processor, a DSP, an ASIC, a field programmable gate array (FPGA) or other programmable logic device (PLD), discrete gate or transistor logic, discrete hardware components, or any combination thereof designed to perform the functions described herein. A general-purpose processor may be a microprocessor, but in the alternative, the processor may be any commercially available processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

If implemented in hardware, an example hardware configuration may comprise a processing system in a wireless node. The processing system may be implemented with a bus architecture. The bus may include any number of interconnecting buses and bridges depending on the specific application of the processing system and the overall design constraints. The bus may link together various circuits including a processor, machine-readable media, and a bus interface. The bus interface may be used to connect a network adapter, among other things, to the processing system via the bus. The network adapter may be used to implement the signal processing functions of the PHY layer. In the case of a user terminal (see FIG. 1), a user interface (e.g., keypad, display, mouse, joystick, etc.) may also be connected to the bus. The bus may also link various other circuits such as timing sources, peripherals, voltage regulators, power management circuits, and the like, which are well known in the art, and therefore, will not be described any further. The processor may be implemented with one or more general-purpose and/or special-purpose processors. Examples include microprocessors, microcontrollers, DSP processors, and other circuitry that can execute software. Those skilled in the art will recognize how best to implement the described functionality for the processing system depending on the particular application and the overall design constraints imposed on the overall system.

If implemented in software, the functions may be stored or transmitted over as one or more instructions or code on a computer readable medium. Software shall be construed broadly to mean instructions, data, or any combination thereof, whether referred to as software, firmware, middleware, microcode, hardware description language, or otherwise. Computer-readable media include both computer storage media and communication media including any medium that facilitates transfer of a computer program from one place to another. The processor may be responsible for managing the bus and general processing, including the execution of software modules stored on the machine-readable storage media. A computer-readable storage medium may be coupled to a processor such that the processor can read information from, and write information to, the storage medium. In the alternative, the storage medium may be integral to the processor. By way of example, the machine-readable media may include a transmission line, a carrier wave modulated by data, and/or a computer readable storage medium with instructions stored thereon separate from the wireless node, all of which may be accessed by the processor through the bus interface. Alternatively, or in addition, the machine-readable media, or any portion thereof, may be integrated into the processor, such as the case may be with cache and/or general register files. Examples of machine-readable storage media may include, by way of example, RAM (Random Access Memory), flash memory, ROM (Read Only Memory), PROM (Programmable Read-Only Memory), EPROM (Erasable Programmable Read-Only Memory), EEPROM (Electrically Erasable Programmable Read-Only Memory), registers, magnetic disks, optical disks, hard drives, or any other suitable storage medium, or any combination thereof. The machine-readable media may be embodied in a computer-program product.

A software module may comprise a single instruction, or many instructions, and may be distributed over several different code segments, among different programs, and across multiple storage media. The computer-readable media may comprise a number of software modules. The software modules include instructions that, when executed by an apparatus such as a processor, cause the processing system to perform various functions. The software modules may include a transmission module and a receiving module. Each software module may reside in a single storage device or be distributed across multiple storage devices. By way of example, a software module may be loaded into RAM from a hard drive when a triggering event occurs. During execution of the software module, the processor may load some of the instructions into cache to increase access speed. One or more cache lines may then be loaded into a general register file for execution by the processor. When referring to the functionality of a software module below, it will be understood that such functionality is implemented by the processor when executing instructions from that software module.

Also, any connection is properly termed a computer-readable medium. For example, if the software is transmitted from a website, server, or other remote source using a coaxial cable, fiber optic cable, twisted pair, digital subscriber line (DSL), or wireless technologies such as infrared (IR), radio, and microwave, then the coaxial cable, fiber optic cable, twisted pair, DSL, or wireless technologies such as infrared, radio, and microwave are included in the definition of medium. Disk and disc, as used herein, include compact disc (CD), laser disc, optical disc, digital versatile disc (DVD), floppy disk, and Blu-ray^{®} disc where disks usually reproduce data magnetically, while discs reproduce data optically with lasers. Thus, in some aspects computer-readable media may comprise non-transitory computer-readable media (e.g., tangible media). In addition, for other aspects computer-readable media may comprise transitory computer-readable media (e.g., a signal). Combinations of the above can also be considered as examples of computer-readable media.

Thus, certain aspects may comprise a computer program product for performing the operations presented herein. For example, such a computer program product may comprise a computer-readable medium having instructions stored (and/or encoded) thereon, the instructions being executable by one or more processors to perform the operations described herein, for example, instructions for performing the operations described herein and illustrated in **FIG. 7-13**.

Further, it should be appreciated that modules and/or other appropriate means for performing the methods and techniques described herein can be downloaded and/or otherwise obtained by a user terminal and/or base station as applicable. For example, such a device can be coupled to a server to facilitate the transfer of means for performing the methods described herein. Alternatively, various methods described herein can be provided via storage means (e.g., RAM, ROM, a physical storage medium such as a compact disc (CD) or floppy disk, etc.), such that a user terminal and/or base station can obtain the various methods upon coupling or providing the storage means to the device. Moreover, any other suitable technique for providing the methods and techniques described herein to a device can be utilized.

## Claims

1. A method for wireless communications by a user equipment, UE, comprising:
sending (1210) a message to a base station, BS, with UE capability information indicating one or more capabilities of the UE;
receiving (1220) signaling from the BS indicating a semi-static slot format configuration for half-duplex, HD, frequency division duplexing, FDD, based on the UE capability information, the slot format configuration including one or more slot format patterns and a cyclic shift, CS, associated with the one or more slot format patterns; and
communicating (1230) with the BS based on the semi-static slot format configuration.

2. The method of claim 1, wherein the signaling from the BS indicating the semi-static slot format configuration is received after completing radio resource control, RRC, setup with the BS.

3. The method of one or more of claims 1-2, wherein the one or more slot format patterns are cell-specific; and/or wherein the one or more slot format patterns are group common; and/or wherein the one or more slot format patterns are UE-specific.

4. The method of one or more of claims 2-3, wherein the receiving the signaling from the BS indicating the semi-static slot format configuration comprises:
receiving dedicated RRC signaling indicating a slot format pattern; and
receiving dedicated RRC signaling indicating a UE-specific CS associated with the slot format pattern; or comprises:
receiving multicast or broadcast signaling indicating a slot format pattern; and
receiving dedicated RRC signaling or downlink control information, DCI, indicating a UE-specific CS associated with the slot format pattern.

5. The method of one or more of claims 2-4, wherein:
the one or more slot format patterns are preconfigured at the UE;
each of the one or more slot format patterns is associated with a downlink bandwidth, BWP, identifier or an uplink BWP identifier; and
receiving the signaling from the BS indicating the semi-static slot format configuration comprises receiving dedicated RRC, medium access control control element, MAC CE, or downlink control information, DCI, signaling indicating a UE-specific CS and a BWP identifier.

6. The method of one or more of claims 1-5, wherein:
the slot format pattern is shared with one or more other UEs; and
the UE and the one or more other UEs are configured with different CSs.

7. The method of one or more of claims 1-6, wherein:
each slot format pattern indicates one or more downlink slots including only downlink symbols mapped a downlink frequency carrier, one or more special slots, and one or more uplink slots including only uplink symbols mapped to an uplink frequency carrier; and
the one or more special slots include one or more downlink symbols, one or more flexible symbols including one or more guard symbols, and one or more uplink symbols.

8. The method of one or more of claims 1-7, further comprising:
determining a conflict between a slot configured by the semi-static slot format configuration and a cell-specific configured transmission.

9. The method of one or more of claims 1-8, further comprising:
ignoring the semi-static slot format configuration and monitoring downlink control information, DCI, including measurement gap information for uplink downlink switching or downlink uplink switching when at least one of the following occurs:
the UE is not in a radio resource control, RRC, connected state;
the UE's timing alignment timer expires;
the UE's active bandwidth part, BWP, configuration does not support the semi-static slot format configuration; or
the semi-static slot format configuration collides with a configured measurement gap.

10. The method of one or more of claims 1-9, wherein the one or more capabilities of the UE includes a minimum switching time for switching from uplink to downlink, a minimum switching time for switching from downlink, or both.

11. The method of one or more of claims 1-10, further comprising:
receiving a request from the BS for the UE capability information, wherein the message to the BS with the UE capability information is sent in response to the request.

12. A method for wireless communications by a base station, BS, comprising:
receiving (1310) a message from a user equipment, UE, with UE capability information indicating one or more capabilities of the UE;
sending (1320) signaling to the UE indicating a semi-static slot format configuration for half-duplex, HD, frequency division duplexing, FDD based on the UE capability information, the slot format configuration including one or more slot format patterns and a cyclic shift, CS, associated with the one or more slot format patterns; and
communicating (1330) with the UE based on the semi-static slot format configuration.

13. An apparatus for a user equipment for wireless communication, comprising:
means for sending a message to a base station, BS, with capability information indicating one or more capabilities of the apparatus;
means for receiving signaling from the BS indicating a semi-static slot format configuration for half-duplex, HD, frequency division duplexing, FDD based on the UE capability information, the slot format configuration including one or more slot format patterns and a cyclic shift, CS, associated with the one or more slot format patterns; and
means for communicating with the BS based on the semi-static slot format configuration.

14. An apparatus for a base station for wireless communication, comprising:
means for receiving a message from a user equipment, UE, with UE capability information indicating one or more capabilities of the UE;
means for sending signaling to the UE indicating a semi-static slot format configuration for half-duplex, HD, frequency division duplexing, FDD based on the UE capability information, the slot format configuration including one or more slot format patterns and a cyclic shift, CS, associated with the one or more slot format patterns; and
means for communicating with the UE based on the semi-static slot format configuration.

15. A computer readable medium storing computer executable code thereon for wireless communications, comprising:
code which when executed by a computer, causes the computer to perform the method of any of claims 1 to 12.

## Patentansprüche

1. Ein Verfahren für drahtlose Kommunikationen durch ein Benutzergerät (User Equipment bzw. UE), aufweisend:
Senden (1210) einer Nachricht an eine Basisstation (BS) mit UE-Fähigkeitsinformationen, die eine oder mehrere Fähigkeiten des UE angeben,
Empfangen (1220) einer Signalisierung von der BS, die eine semistatische Schlitzformatkonfiguration für Halbduplex (HD)-Frequenzmultiplex (FDD) basierend auf den UE-Fähigkeitsinformationen angibt, wobei die Schlitzformatkonfiguration ein oder mehrere Schlitzformatmuster und eine mit dem einen oder den mehreren Schlitzformatmustern assoziierte zyklische Verschiebung (Cyclic Shift bzw. CS) enthält, und
Kommunizieren (1230) mit der BS basierend auf der semistatischen Schlitzformatkonfiguration.

2. Verfahren nach Anspruch 1, wobei die Signalisierung von der BS, die die semistatische Schlitzformatkonfiguration angibt, nach dem Abschließen einer Funkressourcensteuerung (Radio Resource Control bzw. RRC)-Einrichtung mit der BS empfangen wird.

3. Verfahren nach Anspruch 1 oder 2, wobei das eine oder die mehreren Schlitzformatmuster zellenspezifisch sind und/oder wobei das eine oder die mehreren Schlitzformatmuster gruppengemeinsam sind und/oder wobei das eine oder die mehreren Schlitzformatmuster UE-spezifisch sind.

4. Verfahren nach Anspruch 2 oder 3, wobei das Empfangen der Signalisierung von der BS, die die semistatische Schlitzformatkonfiguration angibt, aufweist:
Empfangen einer dedizierten RRC-Signalisierung, die ein Schlitzformatmuster angibt, und
Empfangen einer dedizierten RRC-Signalisierung, die eine mit dem Schlitzformatmuster assoziierte UE-spezifische CS angibt,
oder aufweist:
Empfangen einer Multicast- oder Broadcast-Signalisierung, die ein Schlitzformatmuster angibt, und
Empfangen einer dedizierten RRC-Signalisierung oder von Downlink-Steuerinformationen (Downlink Control Information bzw. DCI), die eine mit dem Schlitzformatmuster assoziierte UE-spezifische CS angeben.

5. Verfahren nach einem der Ansprüche 2 bis 4, wobei:
das eine oder die mehreren Schlitzformatmuster an dem UE vorkonfiguriert sind,
jedes des einen oder der mehreren Schlitzformatmuster mit einem Downlink-Bandbreitenteil (Bandwidth Part bzw. BWP)-Identifizierer oder einem Uplink-BWP-Identifizierer assoziiert ist, und
das Empfangen der Signalisierung von der BS, die die semistatische Schlitzformatkonfiguration angibt, das Empfangen einer dedizierten RRC-, MAC (Medium Access Control)-Steuerelement (Control Element bzw. CE)- oder Downlink-Steuerinformationen (Downlink Control Information bzw. DCI)-Signalisierung, die eine UE-spezifische CS und einen BWP-Identifizierer angibt, aufweist.

6. Verfahren nach einem der Ansprüche 1 bis 5, wobei:
das Schlitzformatmuster mit einem oder mehreren anderen UEs gemeinsam verwendet wird, und
das UE und das eine oder die mehreren anderen UEs mit verschiedenen CSs konfiguriert sind.

7. Verfahren nach einem der Ansprüche 1 bis 6, wobei:
jedes Schlitzformatmuster einen oder mehrere Downlink-Schlitze, die nur auf einen Downlink-Frequenzträger gemappte Downlink-Symbole enthalten, einen oder mehrere spezielle Schlitze und einen oder mehrere Uplink-Schlitze, die nur auf einen Uplink-Frequenzträger gemappte Uplink-Symbole enthalten, angibt, und
der eine oder die mehreren speziellen Schlitze ein oder mehrere Downlink-Symbole, ein oder mehrere flexible Symbole einschließlich eines oder mehrerer Schutzsymbole und ein oder mehrere Uplink-Symbole enthalten.

8. Verfahren nach einem der Ansprüche 1 bis 7, das weiterhin aufweist:
Bestimmen eines Konflikts zwischen einem durch die semistatische Schlitzformatkonfiguration konfigurierten Schlitz und einer zellenspezifischen konfigurierten Sendung.

9. Verfahren nach einem der Ansprüche 1 bis 8, das weiterhin aufweist:
Ignorieren der semistatischen Schlitzformatkonfiguration und Überwachen von Downlink-Steuerinformationen (Downlink Control Information bzw. DCI), die Messlückeninformationen für ein Uplink-Downlink-Schalten oder Downlink-Uplink-Schalten aufweisen, wenn eines der Folgenden auftritt:
das UE befindet sich nicht in einem Funkressourcensteuerung (Radio Resource Control bzw. RRC)-Verbindungszustand,
der Zeitliche-Abstimmung-Timer des UE läuft ab,
die aktive Bandbreitenteil (Bandwidth Part bzw. BWP)-Konfiguration unterstützt die semistatische Schlitzformatkonfiguration nicht, oder
die semistatische Schlitzformatkonfiguration kollidiert mit einer konfigurierten Messlücke.

10. Verfahren nach einem der Ansprüche 1 bis 9, wobei die eine oder die mehreren Fähigkeiten des UE eine minimale Schaltzeit für das Schalten von Uplink zu Downlink und/oder eine minimale Schaltzeit für das Schalten von Downlink aufweisen.

11. Verfahren nach einem der Ansprüche 1 bis 10, das weiterhin aufweist:
Empfangen einer Anfrage von der BS für die UE-Fähigkeitsinformationen, wobei die Nachricht an die BS mit den UE-Fähigkeitsinformationen in Antwort auf die Anfrage gesendet wird.

12. Ein Verfahren für drahtlose Kommunikationen durch eine Basisstation (BS), aufweisend:
Empfangen (1310) einer Nachricht von einem Benutzergerät (User Equipment bzw. UE) mit UE-Fähigkeitsinformationen, die eine oder mehrere Fähigkeiten des UE angeben,
Senden (1320) einer Signalisierung an das UE, die eine semistatische Schlitzformatkonfiguration für Halbduplex (HD)-Frequenzmultiplex (FDD) basierend auf den UE-Fähigkeitsinformationen angibt, wobei die Schlitzformatkonfiguration ein oder mehrere Schlitzformatmuster und eine mit dem einen oder den mehreren Schlitzformatmustern assoziierte zyklische Verschiebung (Cyclic Shift bzw. CS) angibt, und
Kommunizieren (1330) mit dem UE basierend auf der semistatischen Schlitzformatkonfiguration.

13. Eine Vorrichtung für ein Benutzergerät für eine drahtlose Kommunikation, aufweisend:
Mittel zum Senden einer Nachricht an eine Basisstation (BS) mit UE-Fähigkeitsinformationen, die eine oder mehrere Fähigkeiten der Vorrichtung angeben,
Mittel zum Empfangen einer Signalisierung von der BS, die eine semistatische Schlitzformatkonfiguration für Halbduplex (HD)-Frequenzmultiplex (FDD) basierend auf den UE-Fähigkeitsinformationen angibt, wobei die Schlitzformatkonfiguration ein oder mehrere Schlitzformatmuster und eine mit dem einen oder den mehreren Schlitzformatmustern assoziierte zyklische Verschiebung (Cyclic Shift bzw, CS) angibt, und
Mittel zum Kommunizieren mit der BS basierend auf der semistatischen Schlitzformatkonfiguration.

14. Eine Vorrichtung für eine Basisstation für eine drahtlose Kommunikation, aufweisend:
Mittel zum Empfangen einer Nachricht von einem Benutzergerät (User Equipment bzw. UE) mit UE-Fähigkeitsinformationen, die eine oder mehrere Fähigkeiten des UE angeben,
Mittel zum Senden einer Signalisierung an das UE, die eine semistatische Schlitzformatkonfiguration für Halbduplex (HD)-Frequenzmultiplex (FDD) basierend auf den UE-Fähigkeitsinformationen angibt, wobei die Schlitzformatkonfiguration ein oder mehrere Schlitzformatmuster und eine mit dem einen oder den mehreren Schlitzformatmustern assoziierte zyklische Verschiebung (Cyclic Shift bzw, CS) angibt, und
Mittel zum Kommunizieren mit dem UE basierend auf der semistatischen Schlitzformatkonfiguration.

15. Ein computerlesbares Medium mit einem darauf gespeicherten computerausführbaren Code für drahtlose Kommunikationen, aufweisend:
einen Code, der bei einer Ausführung durch einen Computer den Computer zum Durchführen des Verfahrens gemäß einem der Ansprüche 1 bis 12 veranlasst.

## Revendications

1. Procédé de communication sans fil par un équipement d'utilisateur, UE, comprenant :
l'envoi (1210) d'un message à une station de base, BS, avec des informations de capacité de l'UE indiquant une ou plusieurs capacités de l'UE ;
la réception (1220) d'une signalisation de la BS indiquant une configuration de format d'intervalle semi-statique pour le duplexage à répartition en fréquence, FDD, en semi-duplex, HD, sur la base des informations de capacité de l'UE, la configuration de format d'intervalle comprenant un ou plusieurs modèles de format d'intervalle et un décalage cyclique, CS, associé au(x) un ou plusieurs modèles de format d'intervalle ; et
la communication (1230) avec la BS sur la base de la configuration de format d'intervalle semi-statique.

2. Le procédé selon la revendication 1, dans lequel la signalisation provenant de la BS indiquant la configuration de format d'intervalle semi-statique est reçue après avoir terminé la configuration de la commande des ressources radio, RRC, avec la BS.

3. Le procédé selon l'une ou plusieurs des revendications 1 à 2, dans lequel le ou les motifs de format d'intervalle sont spécifiques à la cellule ; et/ou dans lequel le ou les motifs de format d'intervalle sont communs au groupe ; et/ou dans lequel le ou les motifs de format d'intervalle sont spécifiques à l'UE.

4. Le procédé selon une ou plusieurs des revendications 2-3, dans lequel la réception de la signalisation provenant de la BS indiquant la configuration de format d'intervalle semi-statique comprend :
la réception d'une signalisation RRC dédiée indiquant un modèle de format d'intervalle ; et
la réception d'une signalisation RRC dédiée indiquant un CS spécifique à l'UE associé au modèle de format d'intervalle ; ou comprend :
la réception d'une signalisation de multidiffusion ou de diffusion générale indiquant un modèle de format d'intervalle ; et
la réception d'une signalisation RRC dédiée ou d'informations de contrôle de liaison descendante, DCI, indiquant un CS spécifique à l'UE associé au modèle de format d'intervalle.

5. Le procédé selon une ou plusieurs des revendications 2 à 4, dans lequel :
le ou les motifs de format d'intervalle sont préconfigurés au niveau de l'UE ;
chacun du ou des motifs de format d'intervalle est associé à un identifiant de largeur de bande de liaison descendante, BWP, ou à un identifiant de BWP de liaison montante ; et
la réception de la signalisation provenant de la BS indiquant la configuration de format d'intervalle semi-statique comprend la réception d'une signalisation RRC dédiée d'un élément de commande de contrôle d'accès au support, MAC CE, ou d'informations de contrôle de liaison descendante, DCI, indiquant un CS spécifique à l'UE et un identifiant BWP.

6. Le procédé selon une ou plusieurs des revendications 1 à 5, dans lequel :
le motif de format d'intervalle est partagé avec un ou plusieurs autres UE ; et
l'UE et le ou les autres UE sont configurés avec des CS différents.

7. Le procédé selon une ou plusieurs des revendications 1 à 6, dans lequel :
chaque motif de format d'intervalle indique un ou plusieurs intervalles de liaison descendante comprenant uniquement des symboles de liaison descendante mappés sur une porteuse de fréquence de liaison descendante, un ou plusieurs intervalles spéciaux, et
un ou plusieurs intervalles de liaison montante comprenant uniquement des symboles de liaison montante mappés sur une porteuse de fréquence de liaison montante ; et
le ou les intervalles spéciaux comprennent un ou plusieurs symboles de liaison descendante, un ou plusieurs symboles flexibles comprenant un ou plusieurs symboles de garde, et un ou plusieurs symboles de liaison montante.

8. Le procédé selon une ou plusieurs des revendications 1 à 7, comprenant en outre :
la détermination d'un conflit entre un intervalle configuré par la configuration de format d'intervalle semi-statique et une transmission configurée spécifique à la cellule.

9. Le procédé selon une ou plusieurs des revendications 1 à 8, comprenant en outre l'étape consistant à :
ignorer la configuration de format d'intervalle semi-statique et surveiller les informations de contrôle de liaison descendante, DCI, y compris les informations d'intervalle de mesure pour la commutation liaison montante liaison descendante ou la commutation liaison descendante liaison montante lorsqu'au moins l'un des événements suivants se produit :
l'UE n'est pas dans un état connecté de commande de ressource radio, RRC ;
le temporisateur d'alignement de synchronisation de l'UE expire ;
la configuration de la partie de largeur de bande active, BWP, de l'UE ne prend pas en charge la configuration de format d'intervalle semi-statique ; ou
la configuration de format d'intervalle semi-statique entre en conflit avec un intervalle de mesure configuré.

10. Le procédé selon une ou plusieurs des revendications 1 à 9, dans lequel la ou les capacités de l'UE comprennent un temps de commutation minimum pour la commutation de la liaison montante à la liaison descendante, un temps de commutation minimum pour la commutation à partir de la liaison descendante, ou les deux.

11. Le procédé selon une ou plusieurs des revendications 1 à 10, comprenant en outre :
la réception d'une demande de la BS pour les informations de capacité de l'UE, le message à la BS contenant les informations de capacité de l'UE étant envoyé en réponse à la demande.

12. Un procédé de communication sans fil par une station de base, BS, comprenant :
la réception (1310) d'un message provenant d'un équipement d'utilisateur, UE, avec des informations de capacité de l'UE indiquant une ou plusieurs capacités de l'UE ;
l'envoi (1320) d'une signalisation à l'UE indiquant une configuration de format d'intervalle semi-statique pour le duplexage à répartition en fréquence, FDD, en semi-duplex, HD, sur la base des informations de capacité de l'UE, la configuration de format d'intervalle comprenant un ou plusieurs motifs de format d'intervalle et un décalage cyclique, CS, associé au(x) un ou plusieurs motifs de format d'intervalle ; et
la communication (1330) avec l'UE sur la base de la configuration de format d'intervalle semi-statique.

13. Un appareil pour un équipement d'utilisateur pour la communication sans fil, comprenant :
des moyens pour envoyer un message à une station de base, BS, avec des informations de capacité indiquant une ou plusieurs capacités de l'appareil ;
des moyens pour recevoir une signalisation de la BS indiquant une configuration de format d'intervalle semi-statique pour le duplexage à répartition en fréquence, FDD, en semi-duplex, HD, sur la base des informations de capacité de l'UE, la configuration de format d'intervalle comprenant un ou plusieurs motifs de format d'intervalle et un décalage cyclique, CS, associé au(x) un ou plusieurs motifs de format d'intervalle ; et
des moyens pour communiquer avec la BS sur la base de la configuration de format d'intervalle semi-statique.

14. Un appareil pour une station de base pour la communication sans fil, comprenant ;
des moyens pour recevoir un message d'un équipement d'utilisateur, UE, avec des informations de capacité de l'UE indiquant une ou plusieurs capacités de l'UE ;
des moyens pour envoyer une signalisation à l'UE indiquant une configuration de format d'intervalle semi-statique pour le duplexage à répartition en fréquence, FDD, en semi-duplex, HD, sur la base des informations de capacité de l'UE, la configuration de format d'intervalle comprenant un ou plusieurs motifs de format d'intervalle et un décalage cyclique, CS, associé au(x) un ou plusieurs motifs de format d'intervalle ; et
des moyens pour communiquer avec l'UE sur la base de la configuration de format d'intervalle semi-statique.

15. Un support lisible par ordinateur stockant un code exécutable par ordinateur pour les communications sans fil, comprenant :
un code qui, lorsqu'il est exécuté par un ordinateur, amène l'ordinateur à exécuter le procédé selon l'une quelconque des revendications 1 à 12.
